# EUROPEAN PATENT APPLICATION

(11) **EP 4 797 146 A1**
(43) Date of publication of application: **26.08.2026**
(21) Application number: 24884423.5
(22) Date of filing: 15.10.2024
(51) Int. Cl.: G06F 30/27

(54) **METHOD AND RELATED DEVICE FOR ACQUIRING MATHEMATICAL MODEL, AND OPERATIONS OPTIMIZATION METHOD**

(30) Priority: 31.10.2023 CN 202311440915
(71) Applicant: HUAWEI TECHNOLOGIES CO., LTD., Shenzhen 518129 (CN)
(72) Inventor: HAN, Xiongwei, Shenzhen, Guangdong 518129 (CN); DUAN, Jiahui, Shenzhen, Guangdong 518129 (CN); FU, Xiaojin, Shenzhen, Guangdong 518129 (CN); ZHONG, Tao, Shenzhen, Guangdong 518129 (CN); YIN, Yichun, Shenzhen, Guangdong 518129 (CN); GUO, Zhijiang, Shenzhen, Guangdong 518129 (CN); FAN, Zhenan, Shenzhen, Guangdong 518129 (CN); ZHANG, Yong, Shenzhen, Guangdong 518129 (CN); ZENG, Jia, Shenzhen, Guangdong 518129 (CN)
(74) Representative: Goddar, Heinz J.
(86) International application number: PCT/CN2024/124986
(87) International publication number: WO 2025/092419

(57) **Abstract**

A mathematical model obtaining method and device, and an operations optimization method are provided. In the method, an artificial intelligence technology may be used to obtain a mathematical model corresponding to an operations optimization problem. The method includes: outputting at least one problem, and obtaining an answer to each problem, where the answer to each problem is for obtaining first description information, the first description information is description information for describing the operations optimization problem, and a first problem is a problem for obtaining the description information of the operations optimization problem; and obtaining first information based on the first description information, and inputting the first information into a machine learning model, to obtain a mathematical model, where the mathematical model is for solving the operations optimization problem, and the mathematical model includes an objective function and a constraint. The solution greatly reduces manpower costs consumed in a process of obtaining the mathematical model, and can be adapted to obtaining mathematical models in various domains, and has high generalization.

## Description

This application claims priority to Chinese Patent Application No. 202311440915.X, filed with the China National Intellectual Property Administration on October 31, 2023 and entitled "MATHEMATICAL MODEL OBTAINING METHOD AND RELATED DEVICE, AND OPERATIONS OPTIMIZATION METHOD", which is incorporated herein by reference in its entirety.

### TECHNICAL FIELD

This application relates to the field of artificial intelligence, and in particular, to a mathematical model obtaining method and a related device, and an operations optimization method.

### BACKGROUND

An operations optimization problem refers to making an optimal decision that meets a service objective while considering a specific constraint. In a process of actually resolving this type of problem, a mathematical model corresponding to the operations optimization problem needs to be established, and the mathematical model is solved by using a computer.

Currently, to obtain the mathematical model corresponding to the operations optimization problem, specifically, all operations optimization problems may be divided into a plurality of domains, that is, the plurality of domains to which a to-be-established mathematical model can belong are obtained. In each domain included in the plurality of domains, all objective functions in the domain, a text description corresponding to each objective function, all constraints in the domain, and a text description corresponding to each constraint need to be abstracted. After a text description that is input by a user and that corresponds to the operations optimization problem is obtained, similarity matching is performed between the text description input by the user and the text description of each objective function, and similarity matching is performed between the text description input by the user and the text description of each constraint, to obtain one objective function and at least one constraint that meet a similarity condition with the text description input by the user. The mathematical model corresponding to the operations optimization problem includes the objective function and the constraint.

However, because a process of generating "all objective functions, a text description corresponding to each objective function, all constraints, and a text description corresponding to each constraint" that correspond to a single domain is already labor-intensive, and establishing "all objective functions, a text description corresponding to each objective function, all constraints, and a text description corresponding to each constraint" that correspond to the plurality of domains is even labor-intensive, generalization of the solution is also poor.

### SUMMARY

Embodiments of this application provide a mathematical model obtaining method and a related device, and an operations optimization method. In this solution, for different domains, a plurality of objective functions, a text description corresponding to each objective function, a plurality of constraints, and a text description corresponding to each constraint do not need to be generated in each domain in advance. This greatly reduces manpower costs consumed in a process of obtaining a mathematical model, and can be adapted to obtaining mathematical models in various domains, and has high generalization. In addition, in this solution, obtaining description information by obtaining an answer to at least one problem helps obtain more accurate description information of an operations optimization problem, and further helps improve adaptability between the mathematical model output by a machine learning model and the operations optimization problem, that is, helps obtain a more accurate mathematical model.

Embodiments of this application provide the following technical solutions.

According to a first aspect, an embodiment of this application provides a mathematical model obtaining method, where an artificial intelligence technology may be used to obtain a mathematical model corresponding to an operations optimization problem, and the method includes: To obtain description information of a first operations optimization problem, the first device may output at least one first problem to a user, use content replied by the user to each of the at least one first problem as at least one answer, and obtain the at least one answer, where the answer to each of the at least one problem is for obtaining first description information, and the first description information is description information for describing the first operations optimization problem. The first device determines first information based on the first description information, and further inputs the first information into a machine learning model (hereinafter referred to as a "first machine learning model" for ease of description), to obtain a first mathematical model. The first mathematical model includes an objective function and a constraint. The first mathematical model is generated by using the first machine learning model to solve the first operations optimization problem, that is, a solution result of the first mathematical model can resolve the first operations optimization problem.

In this application, the operations optimization problem may be replaced with another description, for example, a mathematical programming problem or a decision-making optimization problem.

For example, the first information may include the first description information and other information, or the first information and the first description information may include same information. For example, the other information may include prompt information. For example, the prompt information may include "Please generate a mathematical model corresponding to an operations optimization problem based on subsequent description information". For another example, the prompt information may include "Please generate a mathematical model based on the first description information, where the first description information includes: ...", or the like. The prompt information may alternatively be represented as other information. The first device may be a client device. For example, the client device may be represented as a terminal device or an edge side device. Alternatively, the first device may be a cloud device. For example, the cloud device may be represented as a server or a server cluster.

For example, when the first device is a client device, if no first machine learning model is deployed on the first device, "the first device inputs the first information into the machine learning model" may be understood as the first device sending the first information to a device on which the first machine learning model is deployed, and "the first device obtains the first mathematical model" may be understood as the first device receiving the first mathematical model sent by the device on which the first machine learning model is deployed.

In this implementation, to obtain the description information of the operations optimization problem, the at least one problem is abstracted, an answer to the at least one problem is obtained, and after the first information is obtained based on the first description information, the first information is input into the machine learning model, to obtain the first mathematical model corresponding to the first operations optimization problem. In this solution, for different domains, a plurality of objective functions, a text description corresponding to each objective function, a plurality of constraints, and a text description corresponding to each constraint do not need to be generated in each domain in advance. This greatly reduces manpower costs consumed in a process of obtaining the mathematical model corresponding to the operations optimization problem, and can be adapted to obtaining mathematical models corresponding to operations optimization problems in various domains, and has high generalization. In addition, in this solution, obtaining the description information of the operations optimization problem by obtaining the answer to the at least one problem alleviates, to some extent, a difficulty that the user cannot accurately determine the first operations optimization problem, helps obtain more accurate description information, and further helps improve adaptability between the mathematical model output by the machine learning model and the operations optimization problem, that is, helps obtain a more accurate mathematical model.

In a possible implementation, the method further includes: The first device displays, by using a display, an answer option corresponding to each first problem; and when obtaining a selection operation input for the first answer option, the first device may obtain a correct answer corresponding to the first answer option, that is, obtain a correct answer to a problem in the at least one first problem.

In a possible implementation, after the first device outputs the first problem to the user, the method further includes: The first device obtains a first answer input by the user by using a text box, and further obtains first matching results between the first answer and all correct answers to the first problem, where the first matching result indicates that which correct answers to the first problem meet a first matching condition with respect to the first answer, or the first matching result indicates a similarity between the first answer and each correct answer of all the correct answers to the first problem. The first device may determine, based on the first matching result, the correct answer to the first problem displayed to the user.

In a possible implementation, the first device prestores a first problem set, and the at least one first problem is determined based on the prestored first problem set. In this implementation, if the first problem set is prestored, which first problems are output to the user can be determined based on the prestored first problem set. This helps improve a speed of a process of "determining which first problems are output", and helps obtain the first mathematical model more efficiently.

In a possible implementation, the first problem set is represented in a data form of a directed graph, and the data form of the directed graph indicates an order of appearance between at least two different problems in the first problem set. In this implementation, the problems included in the first problem set are stored in the data form of the directed graph, so that the order of appearance between the at least two different problems in the first problem set can be indicated. Because an association relationship may exist between different problems in the at least one problem corresponding to the first operations optimization problem, using the data form of the directed graph can better reflect a logical relationship between the different problems, making a questioning process more logical for the user, and helping avoid outputting useless problems to the user, thereby improving user stickiness of this solution.

In a possible implementation, to obtain the description information of the first operations optimization problem, the used first problem set may include a plurality of target problems. The plurality of target problems may include the at least one first problem output to the user. Optionally, the plurality of target problems may further include a second problem other than the first problem. In other words, the second problem is also a problem for obtaining the description information of the first operations optimization problem, and the second problem corresponds to second description information input by the user.

In a possible implementation, before outputting the first problem to the user for the first time, or in a process of outputting the first problem to the user for a plurality of times, the first device may further obtain the second description information input by the user, where the second description information carries the description information of the first operations optimization problem. In this case, the first device may further determine that answers to which second problems in the plurality of target problems included in the first problem set are carried in the second description information, and may further determine, based on the plurality of target problems and the second problem to which answers have been obtained, problems that are in the plurality of target problems included in the first problem set and to which answers have not been obtained. The problem to which the answer has not been obtained is used as the first problem that needs to be output to the user. Correspondingly, that the first device determines the first information based on the first description information may include: The first device may combine the first description information and the second description information to obtain a union set of the first description information and the second description information (hereinafter referred to as "updated first description information" for ease of description), and may further determine the first information based on the updated first description information. The first information includes the updated first description information, that is, the first information includes the first description information and the second description information.

In a possible implementation, after outputting the at least one first problem to the user, the first device may also obtain the second description information input by the user, where the second description information may carry the description information of the first operations optimization problem. In this case, that the first device determines the first information based on the first description information may include: The first device determines the first information based on the first description information and the second description information. Optionally, the first device may combine the first description information and the second description information to obtain updated first description information, and may further determine the first information based on the updated first description information. The first information includes the updated first description information, that is, the first information includes the first description information and the second description information.

In a possible implementation, the method is applied to the first device, the first device stores at least one case, a target case is any one of the at least one case, and the target case includes description information and a mathematical model that correspond to an operations optimization problem. It should be understood that a concept of the "description information" is similar to a concept of the "first description information", and both are description information for describing the operations optimization problem. A concept of the "mathematical model" is similar to a concept of the "first mathematical model". A difference lies in that the description information and the mathematical model included in the target case are already stored in the first device, the first description information is being obtained, and the first mathematical model needs to be generated by using the first machine learning model. That the first device determines the first information based on the first description information includes: The first device determines at least one first case from the at least one case based on a similarity between the first description information and description information included in each of the at least one case; and the first device further obtains the first information based on the first description information and the at least one first case.

A similarity between the first description information and description information included in the first case meets a preset condition. For example, the at least one first case includes K first cases, and the preset condition may include: A similarity between the first description information and description information included in each first case is greater than or equal to a similarity threshold, and/or the K pieces of description information included in the K first cases are K pieces of description information that are most similar to the first description information in all the description information included in the at least one case.

In this implementation, the at least one first case most matching the first description information is obtained from the at least one prestored case, and the similarity between the first description information and the description information included in each first case meets the preset condition, and further each first case and the first description information are both used as inputs of the first machine learning model, that is, each first case is used as a reference case of the first machine learning model. This helps the first machine learning model generate a more accurate first mathematical model, and also helps improve efficiency of the first machine learning model in a process of generating the first mathematical model.

In a possible implementation, the method further includes: The first device obtains second information, where the second information includes at least one of an abstract and a keyword of the first description information; and further determines a similarity between the second information and each piece of description information included in the at least one case, where the similarity between the second information and each piece of description information included in the at least one case is used as the similarity between the first description information and each piece of description information included in the at least one case. In this implementation, because the first description information may include text information input by the user, and the text information input by the user may carry invalid information, the abstract and/or the keyword of the first description information is first obtained, that is, the invalid information in the first description information is filtered out, and then a similarity between the abstract and/or the keyword of the first description information and fourth description information is generated. This helps obtain more accurate similarity information, and further helps obtain a more matched first case.

In a possible implementation, the method may further include: The first device may further obtain third information corresponding to each piece of description information (hereinafter referred to as the "fourth description information" for ease of description) included in the at least one case, that is, obtain at least one piece of third information that is in a one-to-one correspondence with the at least one piece of fourth description information, where each piece of third information includes an abstract and/or a keyword of one piece of fourth description information.

That the first device determines a similarity between the second information and each piece of fourth description information included in the at least one case includes: The first device obtains initial feature information of the second information and initial feature information of each piece of third information, and may further generate third similarity information, where the third similarity information includes a similarity between the initial feature information of the second information and the initial feature information of each piece of third information. The similarity between the initial feature information of the second information and the initial feature information of each piece of third information may be used as a similarity between the second information and each piece of fourth description information, that is, may be used as a similarity between the first description information and each piece of fourth description information.

In a possible implementation, that the first device obtains the first information based on the first description information and the at least one first case may include: The first device may combine the at least one first case and the first description information to obtain the first information, that is, the first information includes the first description information and each first case. For example, the first information may include the first description information and prompt information, and the first device may combine the at least one first case into the prompt information to obtain the first information.

In a possible implementation, before the first device obtains the first description information corresponding to the at least one problem, the method further includes: The first device may determine, from at least one domain to which a to-be-established mathematical model can belong, a domain to which the to-be-established mathematical model belongs (the "domain to which the to-be-established mathematical model belongs" is hereinafter referred to as a "first domain" for ease of description), and further perform determining, based on the first domain to which the to-be-established mathematical model belongs. The first device may prestore at least one problem set that is in a one-to-one correspondence with the at least one domain. After the first domain to which the to-be-established mathematical model belongs is determined, one first problem set corresponding to the first domain may be determined from the at least one problem set, and the at least one problem is further determined based on the first problem set.

In this implementation, all operations optimization problems are divided into a plurality of domains, that is, the plurality of domains to which the to-be-established mathematical model belongs are obtained. After a domain to which the to-be-established mathematical model belongs is determined, at least one problem for obtaining detailed description information of the first operations optimization problem is determined based on the domains to which the to-be-established mathematical model belongs, that is, different problems are used for obtaining description information of operations optimization problems in different domains. It can be learned from the foregoing description that, in this solution, the problem for obtaining the description information of the operations optimization problem is managed with greater refinement, thereby helping obtain more accurate description information and further helping obtain a more accurate mathematical model.

In a possible implementation, that the first device determines the domain to which the to-be-established mathematical model belongs includes: The first device provides the user with a plurality of domains to which the operations optimization problem can belong, that is, providing the user with the plurality of domains to which the to-be-established mathematical model can belong. After a selection operation input by the user for the first domain in the plurality of domains is obtained, the first domain to which the to-be-established mathematical model belongs may be determined.

In a possible implementation, that the first device determines the domain to which the to-be-established mathematical model belongs includes: The first device obtains third description information input by the user, and determines, by using a second machine learning model based on the third description information, the first domain to which the to-be-established mathematical model belongs, where the "third description information" may be understood as background description information of the first operations optimization problem.

In a possible implementation, the domain to which the to-be-established mathematical model belongs includes any one of the following: a location problem domain, a scheduling problem domain, an order fulfillment domain, a supply chain domain, a packing problem domain, a transport domain, a resource assignment domain, a revenue management domain, or a production planning problem domain. In this implementation, the plurality of domains to which the to-be-established mathematical model can belong are listed. This greatly extends an application scenario of this solution, and helps improve implementation flexibility of this solution.

According to a second aspect, an embodiment of this application provides a mathematical model obtaining method, where an artificial intelligence technology may be used to obtain a mathematical model corresponding to an operations optimization problem, a first device stores at least one case, and any one of the at least one case includes description information and the mathematical model that correspond to the operations optimization problem. In the method, the first device obtains first description information, where the first description information is description information for describing a first operations optimization problem; determines, based on a similarity between the first description information and each piece of description information included in the at least one case, at least one second mathematical model from at least one mathematical model included in the at least one case, where the second mathematical model belongs to a first case in the at least one case, and a similarity between the first description information and description information included in the first case meets a preset condition; obtains first information based on the first description information and the at least one second mathematical model; and inputs the first information into a machine learning model, to obtain a first mathematical model, where the first mathematical model includes an objective function and a constraint, and the first mathematical model is for solving the first operations optimization problem.

In a possible implementation, that the first device obtains the first description information includes: The first device obtains the first description information corresponding to at least one first problem, where the first description information includes an answer to each first problem in the at least one first problem, the answer to each first problem in the at least one first problem is for obtaining the first description information, and the first problem is a problem for obtaining the description information of the first operations optimization problem.

In the second aspect of this application, the first device may be further configured to perform the steps performed by the first device in the first aspect and the possible implementations of the first aspect. For specific implementations of the steps, meanings of nouns, and beneficial effects brought in the second aspect, refer to the first aspect. Details are not described herein again.

According to a third aspect, an embodiment of this application provides a mathematical model obtaining apparatus, where an artificial intelligence technology may be used to obtain a mathematical model corresponding to an operations optimization problem, and the mathematical model obtaining apparatus includes: an output module, configured to output at least one first problem; a processing module, configured to obtain at least one answer based on the at least one first problem, where the at least one answer is for obtaining first description information, the first description information is description information for describing a first operations optimization problem, and the first problem is a problem for obtaining the description information of the first operations optimization problem; a determining module, configured to determine first information based on the first description information; and the processing module, further configured to input the first information into a machine learning model, to obtain a first mathematical model, where the first mathematical model includes an objective function and a constraint, and the first mathematical model is for solving the first operations optimization problem.

In the third aspect of this application, the mathematical model obtaining apparatus is further configured to perform the steps performed by the first device in the first aspect and the possible implementations of the first aspect. For specific implementations of the steps, meanings of nouns, and beneficial effects brought in the third aspect, refer to the first aspect. Details are not described herein again.

According to a fourth aspect, an embodiment of this application provides a mathematical model obtaining apparatus, where an artificial intelligence technology may be used to obtain a mathematical model corresponding to an operations optimization problem, the mathematical model obtaining apparatus is applied to a first device, the first device stores at least one case, any one of the at least one case includes description information and the mathematical model that correspond to the operations optimization problem, and the mathematical model obtaining apparatus includes: an obtaining module, configured to obtain first description information, where the first description information is description information for describing a first operations optimization problem; a determining module, configured to determine, based on a similarity between the first description information and each piece of description information included in the at least one case, at least one second mathematical model from at least one mathematical model included in the at least one case, where the second mathematical model belongs to a first case in the at least one case, and a similarity between the first description information and description information included in the first case meets a preset condition; a processing module, configured to obtain first information based on the first description information and the at least one second mathematical model; and the processing module, further configured to input the first information into a machine learning model, to obtain a first mathematical model, where the first mathematical model includes an objective function and a constraint, and the first mathematical model is for solving the first operations optimization problem.

In the fourth aspect of this application, the mathematical model obtaining apparatus is further configured to perform the steps performed by the first device in the second aspect and the possible implementations of the second aspect. For specific implementations of the steps, meanings of nouns, and beneficial effects brought in the fourth aspect, refer to the second aspect.

### Details are not described herein again.

According to a fifth aspect, an embodiment of this application provides a device, including a processor and a memory, the processor is coupled to the memory, the memory is configured to store a program, and the processor is configured to execute the program in the memory, to enable the device to perform the mathematical model obtaining method according to the first aspect or the second aspect.

According to a sixth aspect, an embodiment of this application provides a computer-readable storage medium. The computer-readable storage medium stores a computer program, and when the computer program runs on a computer, the computer is enabled to perform the method according to the first aspect or the second aspect.

According to a seventh aspect, an embodiment of this application provides a computer program product. The computer program product includes a program, and when the program runs on a computer, the computer is enabled to perform the method according to the first aspect or the second aspect.

According to an eighth aspect, an embodiment of this application provides an operations optimization method. The method includes: After obtaining a first mathematical model, a second device may solve the first mathematical model to obtain a solution result of the first mathematical model, where the first mathematical model includes an objective function and a constraint, the first mathematical model is for solving a first operations optimization problem, and the first mathematical model is obtained based on the method according to the first aspect or the second aspect.

According to a ninth aspect, this application provides a chip system. The chip system includes a processor, configured to support implementation of functions in the foregoing aspects, for example, sending or processing data and/or information in the foregoing methods. In a possible design, the chip system further includes a memory. The memory is configured to store program instructions and data that are necessary for the terminal device or the communication device. The chip system may include a chip, or may include a chip and another discrete component.

### BRIEF DESCRIPTION OF DRAWINGS

FIG. 1 is a diagram of a structure of an artificial intelligence main framework according to an embodiment of this application;
FIG. 2 is a diagram of a system architecture of a data processing system according to an embodiment of this application;
FIG. 3 is a diagram of a mathematical model obtaining method according to an embodiment of this application;
FIG. 4 is another schematic flowchart of a mathematical model obtaining method according to an embodiment of this application;
FIG. 5 is a diagram of an interface for obtaining "a domain to which a to-be-established mathematical model belongs" according to an embodiment of this application;
FIG. 6 is a diagram of obtaining second prediction information by using a large model according to an embodiment of this application;
FIG. 7 is a diagram of a plurality of target problems in a form of a directed graph according to an embodiment of this application;
FIG. 8 is a diagram of "displaying a first problem" and "obtaining an answer to the first problem" according to an embodiment of this application;
FIG. 9 is a diagram of obtaining first description information corresponding to at least one problem according to an embodiment of this application;
FIG. 10 is a schematic flowchart of determining at least one first case from at least one case according to an embodiment of this application;
FIG. 11 is a schematic flowchart of obtaining a first mathematical model based on first information according to an embodiment of this application;
FIG. 12 is a diagram of outputting a first mathematical model by using a display according to an embodiment of this application;
FIG. 13 is another diagram of a mathematical model obtaining method according to an embodiment of this application;
FIG. 14 is a diagram of a structure of a mathematical model obtaining apparatus according to an embodiment of this application;
FIG. 15 is a diagram of another structure of a mathematical model obtaining apparatus according to an embodiment of this application; and
FIG. 16 is a diagram of a structure of a device according to an embodiment of this application.

### DESCRIPTION OF EMBODIMENTS

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

"Sending" and "receiving" in embodiments of this application represent signal transfer directions. For example, "sending information to XX device" may be understood as that a destination end of the information is XX device, and may include direct sending through an air interface, or include indirect sending through an air interface by another unit or module. "Receiving information from YY device" may be understood as that a source end of the information is YY device, and may include direct receiving from YY device through an air interface, or may include indirect receiving from YY device via another unit or module through an air interface. "Sending" may alternatively be understood as "outputting" of a chip interface, and "receiving" may alternatively be understood as "inputting" of the chip interface. In other words, sending and receiving may be performed between devices, or may be performed within a device. For example, sending or receiving is performed between components, modules, chips, software modules, or hardware modules in a device through a bus, a cable, or an interface. It may be understood that necessary processing, such as encoding and modulation, may be performed on the information between the source end at which the information is sent and the destination end, but the destination end may understand valid information from the source end. Similar descriptions in this application may be understood similarly. Details are not described again.

In embodiments of this application, "indication" may include a direct indication and an indirect indication, or may include an explicit indication and an implicit indication. Information indicated by specific information (for example, the following indication information) is referred to as to-be-indicated information. In a specific implementation process, the to-be-indicated information may be indicated in a plurality of manners, for example, but not limited to, directly indicating the to-be-indicated information, for example, indicating the to-be-indicated information, an index of the to-be-indicated information, or the like. Alternatively, the to-be-indicated information may be indirectly indicated by indicating other information. An association relationship exists between the other information and the to-be-indicated information. Alternatively, only a part of the to-be-indicated information may be indicated, and a remaining part of the to-be-indicated information is known or pre-agreed on. For example, specific information may alternatively be indicated by using an arrangement sequence of pieces of information that is pre-agreed on (for example, predefined in a protocol), to reduce indication overheads to some extent. A specific indication manner is not limited in this application. It may be understood that, for a sender of the indication information, the indication information may indicate the to-be-indicated information, and for a receiver of the indication information, the indication information may be used for determining the to-be-indicated information.

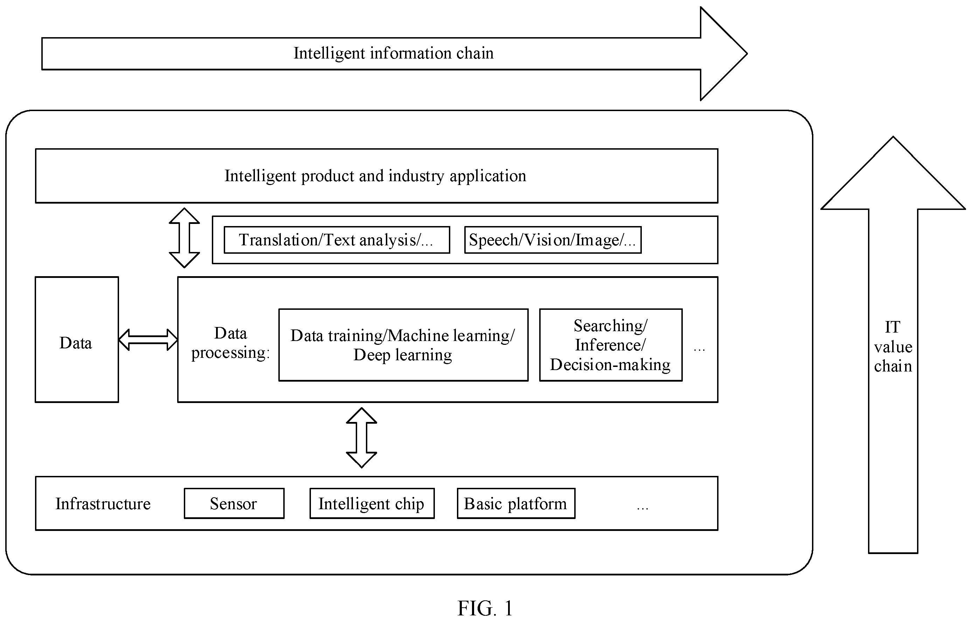

An overall working procedure of an artificial intelligence system is first described. FIG. 1 shows a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the outside world, and implements support by using a basic platform. The infrastructure communicates with the outside through a sensor. A computing capability is provided by an intelligent chip. The intelligent chip may be specifically a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computation.

### (2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching.

Decision-making is a process of making a decision after intelligent information is inferred, and usually provides functions such as classification, ranking, and prediction.

### (4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

### (5) Intelligent product and industry application

The intelligent products and the industry application are products and application of the artificial intelligence system in various domains, are obtained by packaging an overall artificial intelligence solution, and implement productization and practical application of intelligent information decision-making. Application domains thereof mainly include intelligent terminals, intelligent manufacturing, intelligent transportation, smart home, intelligent healthcare, intelligent security protection, autonomous driving, smart city, and the like.

The method provided in this application may be applied to various application domains of the artificial intelligence technology. Specifically, the method may be used to automatically generate, when an operations optimization problem exists in various application domains, a mathematical model corresponding to the operations optimization problem. The mathematical model obtaining method provided in this application is used to automatically generate, by using a machine learning model, the mathematical model corresponding to the operations optimization problem.

For example, the mathematical model may include an objective function and a constraint, and the mathematical model may further include variables involved in the objective function and the constraint. To further understand a relationship between the "operations optimization problem" and the "mathematical model", the following provides an example with reference to a specific scenario. Herein, an example in which the operations optimization problem is a production planning problem is used. The production planning problem is also referred to as an advanced scheduling problem, and is a problem faced by manufacturing enterprises during production and processing. In production, the enterprises need to make decisions on how to optimally utilize resources to meet customer demand. A main task is to match supply with demand, and output daily suggested processing decisions of each factory, suggested transportation decisions between factories, and delivery decisions of demand for a period of time. When making a decision, the objective is to maximize delivery levels while minimizing costs, and constraints such as not exceeding an upper limit of production capacity, not exceeding an upper limit of inventory, and raw materials being substitutable should be considered.

For example, key components (raw materials) involved in the production planning problem (that is, one type of operations optimization problem) include a mechanical part 1 and a mechanical part 2, and there are three demand codes corresponding to the production planning problem: an inverter A, an inverter B, and an inverter C. Demand corresponding to the production planning problem includes 50 inverters A, 100 inverters B, and 150 inverters C, a virtual revenue of the inverter A is 1.3, a virtual revenue of the inverter B is 2.1, and a virtual revenue of the inverter C is 1.8. An inventory quantity of the mechanical part 1 is 100, and an inventory quantity of the mechanical part 2 is 90. The mechanical part 1 may be used to produce the inverter A and the inverter B. The processing unit inverter A or inverter B needs two mechanical parts 1, the processing unit inverter C needs one mechanical part 2, and the mechanical part 2 can substitute for the mechanical part 1, but the mechanical part 1 cannot substitute for the mechanical part 2. Decisions are made on production quantities of inverters A, B, and C and assignment of mechanical parts 1 and 2 to maximize the total virtual revenues of the met demand.

A mathematical model corresponding to the production planning problem may be as follows:
variables:
   (production quantity of inverters A) x
   (production quantity of inverters B) y
   (production quantity of inverters C) z
   (substitute quantity of mechanical parts 2 substituting for mechanical parts 1) r
objective function:
   (maximization of total virtual revenues) maximize: 1.3x+2.1y+1.8z
constraints:
   (constraint on the maximum production quantity of inverters A) x≤50
   (constraint on the maximum production quantity of inverters B) y≤100
   (constraint on the maximum production quantity of inverters C) z≤150
   (consumption quantity of mechanical parts 1 cannot exceed the inventory) 2x+2y-r≤100
   (consumption quantity of mechanical parts 2 cannot exceed the inventory) z+r≤90
   (non-negative integer decision variable constraint) x, y, z, r\in\mathbb_{N}

It should be noted that the foregoing examples of the "operations optimization problem" and the "mathematical model" are merely for ease of understanding of this solution, and are not intended to limit this solution. Because the method provided in this application may be used in intelligent manufacturing, intelligent transportation, or another domain, the following uses application scenarios in a plurality of application domains of this application as examples.

### Application domain 1: intelligent manufacturing domain

For example, a production planning problem may exist in the intelligent manufacturing domain. For explanations and examples of the production planning problem, refer to the foregoing descriptions. Details are not described herein again. In this case, a mathematical model corresponding to the production planning problem in the intelligent manufacturing domain may be obtained by using the method provided in this application.

### Application domain 2: intelligent transportation domain

For example, in the intelligent transportation domain, under a constraint of ensuring security of a transportation system, a traffic signal in a traffic network may be optimized to improve efficiency of the transportation system. In this case, an operations optimization problem corresponding to the traffic signal may exist. Therefore, a mathematical model corresponding to the operations optimization problem corresponding to the traffic signal may be obtained by using the method provided in this application.

It should be noted that the method provided in this application may be further applied to another application scenario. The foregoing examples of various application scenarios in this application are merely for ease of understanding of this solution, and are not intended to limit this solution.

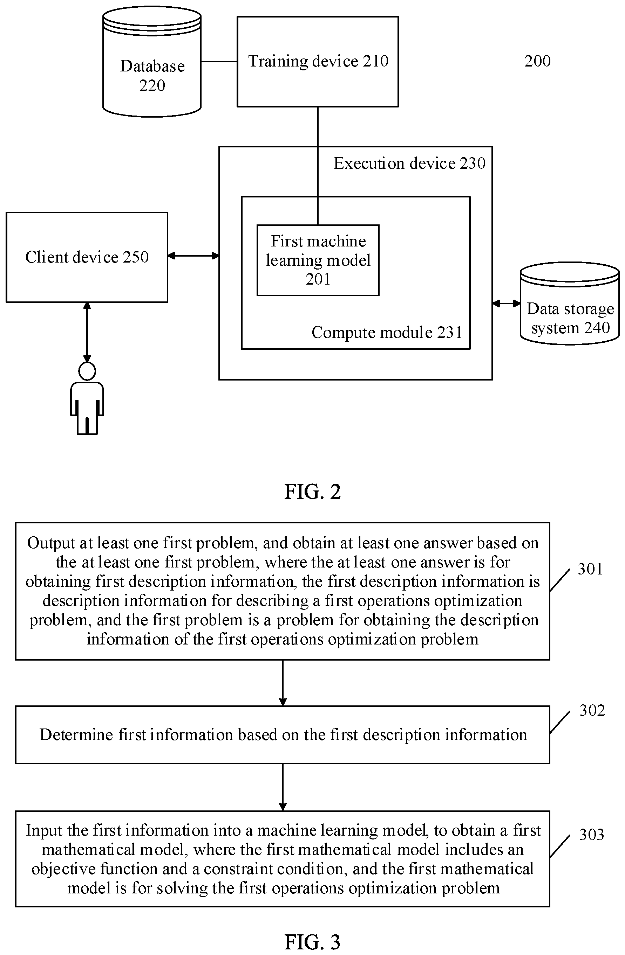

Before the method provided in this application is described in detail, refer to FIG. 2. FIG. 2 is a diagram of a system architecture of a data processing system according to an embodiment of this application. In FIG. 2, the data processing system 200 includes a training device 210, a database 220, an execution device 230, a data storage system 240, and a client device 250. The execution device 230 includes a compute module 231.

The database 220 stores a training data set. In a training phase of a first machine learning model 201, the training device 210 generates the first machine learning model 201, and performs iterative training on the first machine learning model 201 by using the training data set, to obtain the first machine learning model 201 on which a training operation has been performed. The first machine learning model 201 may be specifically represented as a neural network, or may be represented as a non-neural network model. In this embodiment of this application, descriptions are provided only by using an example in which the first machine learning model 201 is represented as a neural network. Further, when the first machine learning model 201 is represented as a neural network, the first machine learning model 201 may be a large model, or may be another type of neural network, or the like. This is not limited in this embodiment of this application.

The first machine learning model 201 that is obtained by the training device 210 and on which a training operation has been performed may be deployed on the compute module 231 of the execution device 230. The execution device 230 may invoke data, code, and the like in the data storage system 240, or may store data, instructions, and the like into the data storage system 240. The data storage system 240 may be disposed in the execution device 230, or the data storage system 240 may be an external memory relative to the execution device 230. It should be noted that, in an application phase of the first machine learning model 201, a mathematical model corresponding to an operations optimization problem is generated by using the first machine learning model 201. For concepts of the "operations optimization problem" and the "mathematical model", refer to the foregoing examples. Details are not described herein again.

In some embodiments of this application, refer to FIG. 2. The execution device 230 and the client device 250 are independent devices. An input/output (I/O) interface is configured for the execution device 230 to exchange data with the client device 250. After obtaining first description information corresponding to at least one problem, the client device 250 may obtain first information based on the first description information, and further send the first information to the execution device 230 through the I/O interface. The first description information includes description information of a first operations optimization problem. After receiving the first information, the execution device 230 may generate, by using the first machine learning model 201 in the compute module 231, a first mathematical model corresponding to the first information, and further send the first mathematical model to the client device 250 through the I/O interface.

For example, the client device 250 may be represented as a terminal device or an edge side device, and the execution device 230 may be represented as a cloud device, for example, a server or a server cluster. Product forms of the client device 250 and the execution device 230 are not limited in this embodiment of this application.

It should be noted that FIG. 2 is merely a diagram of architectures of two data processing systems according to an embodiment of the present invention, and position relationships between devices, components, modules, and the like shown in the figure constitute no limitation. For example, in some other embodiments of this application, the execution device 230 and the client device 250 may be integrated into a same device, and a user may directly interact with the execution device 230. For example, when the client device 250 is a mobile phone or a tablet, the execution device 230 may be a module that is in a host processor (Host CPU) of the mobile phone or the tablet and that performs data processing by using the first machine learning model. Alternatively, the execution device 230 may be a neural-network processing unit (NPU) in the mobile phone or the tablet. The NPU is mounted to a host processor as a coprocessor, and the host processor assigns a task.

Specifically, FIG. 3 is a diagram of a mathematical model obtaining method corresponding to an operations optimization problem according to an embodiment of this application. 301: A first device outputs at least one first problem, and obtains at least one answer based on the at least one first problem, where the at least one answer is for obtaining first description information, the first description information is description information for describing a first operations optimization problem, and the first problem is a problem for obtaining the description information of the first operations optimization problem.

In this embodiment of this application, for example, the first device may be the client device 250 in FIG. 2. To obtain detailed first description information of the first operations optimization problem, the first device may first determine at least one problem (hereinafter referred to as a "target problem" for ease of differentiation) for obtaining the description information of the first operations optimization problem, further determine at least one problem (hereinafter referred to as a "first problem" for ease of differentiation) output to a user, use content replied by the user to each of the at least one first problem as the at least one answer, and obtain the at least one answer.

For example, when the operations optimization problem is a production scheduling problem, the at least one target problem may include: whether a demand delivery mode is back order (back order) or lost sale (lost sale); whether a production structure is single-layer or multilayer; whether one item or a plurality of items need to be produced; another problem; or the like. For another example, when the operations optimization problem is a factory scheduling problem, the at least one target problem may include: a quantity of machines, a relationship between a task and a machine, another problem, or the like. It should be noted that, the at least one target problem is merely used as an example herein with reference to a specific operations optimization problem to facilitate understanding of this solution. The at least one target problem may also be oriented to any operations optimization problem. How to specifically set the at least one target problem may be flexibly determined with reference to an actual application scenario. This is not limited in this embodiment of this application.

302: The first device determines first information based on the first description information.

In this embodiment of this application, the first information may include the first description information and other information, or the first information and the first description information may include same information. For example, the other information may include prompt information. For example, the prompt information may include "Please generate a mathematical model corresponding to an operations optimization problem based on subsequent description information". For another example, the prompt information may include "Please generate a mathematical model corresponding to the operations optimization problem based on the first description information, where the first description information includes: ...", or the like. The prompt information may alternatively be represented as other information.

303: The first device inputs the first information into a machine learning model, to obtain a first mathematical model, where the first mathematical model includes an objective function and a constraint, and the first mathematical model is for solving the first operations optimization problem.

In this embodiment of this application, the machine learning model (hereinafter referred to as a "first machine learning model" for ease of differentiation) may be a large model. For example, the large model may be specifically represented as a Pangu large model or another type of large model. Alternatively, the first machine learning model may be a neural network in another form. For example, the first machine learning model may be a neural network based on an attention mechanism. This is not limited in this application.

The first mathematical model is a mathematical model that is generated by using the first machine learning model and that corresponds to the first operations optimization problem. The first mathematical model is generated by using the first machine learning model to solve the first operations optimization problem, that is, a solution result of the first mathematical model can resolve the first operations optimization problem. For example, the first mathematical model includes an objective function and a constraint that correspond to the first operations optimization problem. Optionally, the first mathematical model may further include a variable corresponding to the first operations optimization problem. For an example of the first mathematical model, refer to the foregoing description. An example is not provided herein again.

In a case, "the first device inputs the first information into the first machine learning model" may be understood as the first device sending the first information to a device on which the first machine learning model is deployed, and "the first device obtains the first mathematical model corresponding to the first operations optimization problem" may be understood as that the first device receives the first mathematical model sent by the device on which the first machine learning model is deployed.

In another case, step 303 may be understood as that the first device inputs the first information into the locally deployed first machine learning model, to obtain the first mathematical model output by the first machine learning model.

It should be noted that the "operations optimization problem" in this application may also be referred to as a "decision-making optimization problem" or another name, and the "mathematical model" in this application may also be referred to as a "mathematical programming model" or another name.

In this embodiment of this application, to obtain the description information of the operations optimization problem, the at least one problem is abstracted, an answer to the at least one problem is obtained, and after the first information is obtained based on the first description information, the first information is input into the machine learning model, to obtain the first mathematical model corresponding to the first operations optimization problem. In this solution, for different domains, a plurality of objective functions, a text description corresponding to each objective function, a plurality of constraints, and a text description corresponding to each constraint do not need to be generated in each domain in advance. This greatly reduces manpower costs consumed in a process of obtaining the mathematical model corresponding to the operations optimization problem, and can be adapted to obtaining mathematical models corresponding to operations optimization problems in various domains, and has high generalization. In addition, in this solution, obtaining the description information of the operations optimization problem by obtaining the answer to the at least one problem alleviates, to some extent, a difficulty that the user cannot accurately determine the first operations optimization problem, and further helps improve adaptability between the mathematical model output by the machine learning model and the operations optimization problem, that is, helps obtain a more accurate mathematical model.

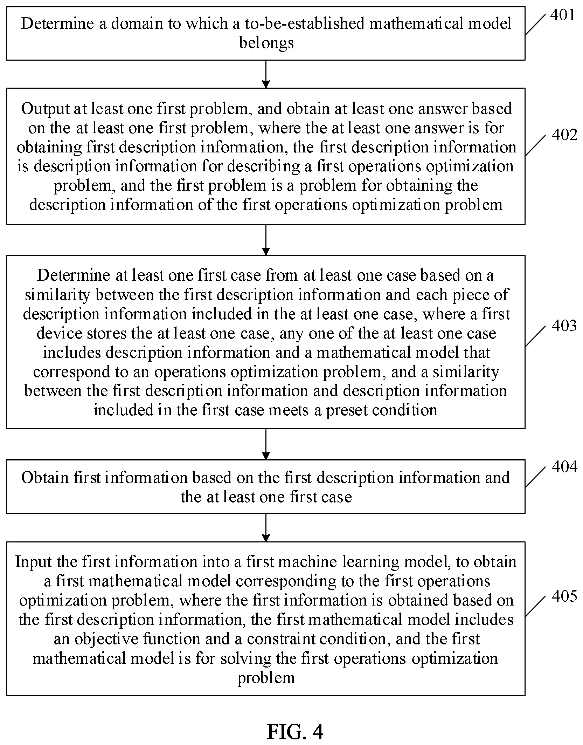

With reference to the foregoing descriptions, the following starts to describe in detail a specific implementation procedure of the method provided in embodiments of this application. Specifically, FIG. 4 is another schematic flowchart of a mathematical model obtaining method according to an embodiment of this application. The mathematical model obtaining method provided in this embodiment of this application may include the following steps.

401: Determine a domain to which a to-be-established mathematical model belongs.

In this embodiment of this application, step 401 is an optional step. For example, the first device in the embodiment corresponding to FIG. 4 may be the client device 250 shown in FIG. 2. Before performing the step of generating the mathematical model corresponding to the first operations optimization problem, the first device may first determine the domain to which the to-be-established mathematical model belongs (hereinafter referred to as a "first domain" for ease of description), and further determine, based on the first domain to which the to-be-established mathematical model belongs, answers to which problems (hereinafter referred to as a "target problem" for ease of description) need to be obtained, to obtain detailed first description information of the first operations optimization problem. It should be understood that for a relationship between the two concepts "first description information" and "first operations optimization problem", refer to the foregoing description. Details are not described herein again. Because the mathematical model is established to resolve the first operations optimization problem, "the domain to which the to-be-established mathematical model belongs" may also be understood as the domain to which the first operations optimization problem belongs.

For example, the first domain to which the to-be-established mathematical model belongs may be any one of the following domains: a location problem (location problem) domain, a scheduling (scheduling) problem domain, an order fulfillment (order fulfillment) domain, a supply chain (supply chain) domain, a packing problem (packing problem) domain, a transport (transport) domain, a resource assignment (resource assign) domain, a revenue (revenue) management domain, a production planning (planning) problem domain, or another domain. It should be noted that: A specific domain to which the to-be-established mathematical model may belong may be flexibly determined with reference to an actual application scenario. The example herein is merely used to facilitate understanding of a concept of "the domain to which the to-be-established mathematical model belongs", and is not intended to limit this solution. The plurality of domains to which the to-be-established mathematical model can belong are listed. This greatly extends an application scenario of this solution, and helps improve implementation flexibility of this solution.

For example, the "location problem domain" mainly involves selecting one or more optimal locations from a given candidate location set to meet a specific objective and constraint. The location problem domain may include a plurality of sub-problems, for example, a facility location problem, a warehouse location problem, a network location problem, or another location problem. For example, the facility location problem refers to the need to determine which facility locations should be opened, given a group of potential facility locations and a group of demand points, to meet demand and minimize overall costs or maximize overall benefits. This type of problem is common in application domains such as retail and logistics.

The "scheduling problem domain" refers to reasonably arranging the sequence and time of tasks or work to maximize efficiency or meet specific constraints in the case of limited resources. The scheduling problem domain may include a plurality of sub-problems, for example, may include a job scheduling problem, a vehicle scheduling problem, a project scheduling problem, or another scheduling problem. For example, the job scheduling problem refers to the need to determine start time and completion time for each job, given a group of jobs and a group of available resources, to minimize the overall completion time or maximize the overall profit. This type of problem is common in application domains such as production, manufacturing, and project management.

The "order fulfillment domain" refers to the reasonable arrangement of order processing and delivery, given a group of orders and a group of available resources, to meet customer demand and maximize efficiency. The order fulfillment problem involves many aspects, including order receiving, order processing, inventory management, and logistics distribution. The objective is to minimize order processing time, reduce inventory costs, and improve on-time delivery rate while meeting customer demand. In the order fulfillment problem, common challenges include order priority, resource limitation, delivery time window, and inventory management. The key to addressing these challenges is to reasonably arrange the order processing sequence, assign resources, optimize a logistics path, and the like. The method and technology in operation research can be used to resolve the order fulfillment problem For example, linear programming can be used to optimize the resource assignment and order processing sequence, dynamic programming can be used to optimize the logistics path, and simulated annealing and genetic algorithms can be used to solve a complex scheduling problem.

The "supply chain domain" refers to the optimization of logistics, inventory, production, and other operations in a supply chain network involving a plurality of links and participants through reasonable planning and decision-making to maximize the efficiency and profit of the entire supply chain. A supply chain problem involves a plurality of links, including suppliers, manufacturers, distributors, retailers, logistics, inventory, and order management. The objective is to achieve optimal resource assignment, inventory control, production planning, and logistics distribution to meet customer demand and reduce costs by optimizing decision-making at each link of the supply chain.

The "packing problem domain" refers to placing a group of items into fewest possible containers to maximize utilization of container space. The packing problem is often used to optimize the logistics and transportation domain to reduce transportation costs and improve efficiency. The packing problem domain may include a plurality of sub-problems, such as a onedimensional packing problem and a two-dimensional packing problem. For example, the onedimensional packing problem refers to placing a group of items into a container on a straight line so that the items do not overlap. Each item has its own length, and the container has a specific length limit. The objective is to find a placement scheme that minimizes a quantity of containers used. The two-dimensional packing problem is to put a group of items into a container on a two-dimensional plane so that the items do not overlap. Each item has its own length and width, and the container has specific length and width limits. The objective is to find a placement scheme that minimizes the quantity of containers used.

The "transport domain" refers to the problem of optimizing resource assignment and path selection in a traffic network. The operations optimization problem in the transport domain involves traffic flow management, path planning, traffic signal optimization, and the like, aiming to improve efficiency and safety of a transportation system. The transport domain may include a plurality of sub-problems, for example, including a traffic flow assignment problem, a path selection problem, and a traffic signal optimization problem. For example, the traffic flow assignment problem refers to how to reasonably assign traffic flow across different paths, to reduce congestion and improve traffic efficiency. This problem may be resolved by establishing a traffic flow model and using an optimization algorithm. The path selection problem refers to how to select an optimal path to reach a destination in a given traffic network. This problem may be optimized by considering factors such as traffic flow, road conditions, and travel time.

The "resource assignment domain" refers to how to reasonably assign limited resources to maximize benefits or meet specific constraints. Resources can be human resources, materials, funds, and equipment. The operations optimization problem in the resource assignment domain can involve different domains, such as production, logistics, and project management. The resource assignment domain may include a plurality of sub-problems, for example, including a production resource assignment problem, a logistics resource assignment problem, and a project resource assignment problem. For example, the production resource assignment problem refers to how to reasonably assign resources in a production process to maximize output or profit. This problem involves production line optimization, job scheduling, equipment configuration, and the like. The logistics resource assignment problem refers to how to reasonably assign resources in the logistics process to minimize costs or improve efficiency. This problem involves transportation, warehousing, and distribution of goods. The project resource assignment problem refers to how to reasonably assign resources during project execution to maximize project completion or meet specific constraints. This problem involves project task assignment, resource scheduling, and progress control.

The "revenue management domain" refers to how to maximize the revenue of an enterprise or organization, and optimize the revenue through reasonable pricing, inventory management, and capacity control. The revenue management problem is often applied to service industries, such as aviation, hotel, and tourism domains. The revenue management domain may include a plurality of sub-problems, for example, including a pricing problem, an inventory management problem, and a capacity control problem. For example, the pricing problem refers to how to determine the price of a product or service to maximize the revenue, and the problem involves factors such as market demand, competitive environment, and consumer behavior.

The "production planning problem domain" refers to how to reasonably arrange resources and tasks in the production process to maximize production efficiency and meet customer demand. The production planning problem involves production scheduling, task assignment, resource utilization, and the like, aiming to improve efficiency and flexibility of the production system. The production planning domain may include a plurality of sub-problems, for example, including a production scheduling problem, a task assignment problem, a resource assignment problem, and the like. For example, the production scheduling problem refers to how to reasonably arrange an execution sequence and time of production tasks to minimize production time and costs. This problem involves aspects such as task priority, equipment utilization, and production line balance. The task assignment problem refers to how to reasonably assign production tasks to different workstations or employees to maximize production efficiency and balance workload. This problem involves characteristics of the tasks, capabilities of the workstations, and skills of the employees. The resource assignment problem refers to how to reasonably assign resources in the production process to maximize resource utilization and meet production demand. This problem involves equipment scheduling, raw material procurement, and human resource assignment.

It should be noted that, in actual application, the to-be-established mathematical model may also be divided into other domains. The foregoing explanations and descriptions of the plurality of problem domains to which the to-be-established mathematical model belongs are merely intended to facilitate understanding of this solution, and are not intended to limit this solution.

The first device may implement step 401 in a plurality of manners. In an implementation, the first device may provide a user with a plurality of domains to which the operations optimization problem can belong, that is, providing the user with the plurality of domains to which the to-be-established mathematical model can belong. After a selection operation input by the user for the first domain in the plurality of domains is obtained, the first domain to which the to-be-established mathematical model belongs may be determined.

For example, the first device may display, by using a display, the plurality of domains to which the operations optimization problem can belong. After receiving a tap operation input by the user for a domain in the plurality of domains, the first device may determine that the selection operation input by the user for the first domain is obtained.

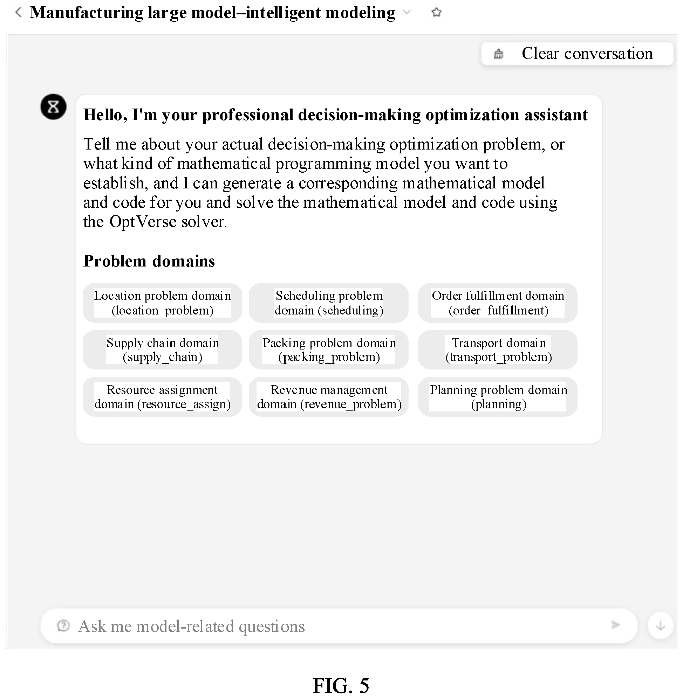

For more intuitive understanding of this solution, FIG. 5 is a diagram of an interface for obtaining "a domain to which a to-be-established mathematical model belongs" according to an embodiment of this application. As shown in FIG. 5, after determining that a mathematical model needs to be automatically constructed for an operations optimization problem, the first device may display, to the user by using a display, a plurality of domains to which the operations optimization problem can belong, that is, a location problem domain, a scheduling problem domain, an order fulfillment domain, a supply chain domain, a packing problem domain, a transport domain, a resource assignment domain, a revenue management domain, and a planning problem domain shown in FIG. 5. After receiving a tap operation input by the user for a domain in the plurality of domains, the first device may determine that a selection operation input by the user for the first domain (that is, the "planning problem domain") is obtained. It should be understood that the example in FIG. 5 is merely for ease of understanding of this solution, and is not intended to limit this solution.

For another example, in another case, the first device may play, to the user in a voice form, the plurality of domains to which the operations optimization problem can belong, and may obtain a selection operation input by the user for the first domain in the plurality of domains in the voice form. For example, the first device may play, in the voice form, the "domains to which the operations optimization problem belongs include: a location problem domain, a scheduling problem domain, an order fulfillment domain, a supply chain domain, a packing problem domain, a transport domain, a resource assignment domain, a revenue management domain, and a production planning problem domain, and which domain of the operations optimization problem is intended for mathematical model generation". It should be understood that the example herein is not intended to limit this solution.

In another case, when the first device may display, by using the display, the plurality of domains to which the operations optimization problem can belong, the first device may also play, to the user in a voice form, the plurality of domains to which the operations optimization problem can belong. After obtaining a tap operation input by the user for a domain in the plurality of domains, the first domain to which the to-be-established mathematical model belongs may be determined. It should be noted that the first device may further implement, in another manner, "provide the user with a plurality of domains to which the operations optimization problem can belong, and further obtain a selection operation input by the user for the first domain in the plurality of domains". The example herein is merely used to prove implementability of this solution, and is not intended to limit this solution.

In another implementation, the first device may obtain third description information input by the user, and determine, by using a second machine learning model based on the third description information, the first domain to which the to-be-established mathematical model belongs, where the "third description information" may be understood as background description information of the first operations optimization problem.

For example, the first device may display a text box by using the display, and receive, by using the text box, the third description information input by the user in a text form, or the first device may receive the third description information input by the user in a voice form, or may obtain the third description information in another manner. A form in which the first device obtains the third description information is not limited in this application. For example, content of the third description information may be "Please generate a mathematical model for an operations optimization problem in the supply chain domain", an "operations optimization problem in the packing problem domain", or other content. It should be understood that the example herein is merely used for ease of understanding this solution, and is not intended to limit this solution.

For example, in a case, the second machine learning model may be specifically represented as a large model. It should be noted that when the second machine learning model is represented as a large model, the second machine learning model and the first machine learning model may be a same machine learning model, or may be different machine learning models. This is not limited in this application.

After obtaining the third description information, the first device may input the plurality of domains to which the operations optimization problem can belong and the third description information into the large model, to obtain second prediction information corresponding to the third description information. The second prediction information indicates the first domain corresponding to the third description information, that is, the first domain corresponding to the first operations optimization problem.

For example, the first device may determine a first prompt based on "the plurality of domains to which the operations optimization problem can belong". For example, content included in the first prompt may be "based on the given background description, select a domain most matching the background description of the operations optimization problem from the location problem domain, the scheduling problem domain, the order fulfillment domain, the supply chain domain, the packing problem domain, the transport domain, the resource assignment domain, the revenue management domain, and the production planning problem domain". It should be understood that the example herein is merely for ease of understanding the concept of the "first prompt", and is not intended to limit this solution.

"The first device inputs the plurality of domains to which the operations optimization problem can belong and the third description information into the second machine learning model" may be understood as that the first device may send the first prompt and the third description information to a device on which the second machine learning model is deployed. After receiving the first prompt and the third description information, the device on which the second machine learning model is deployed invokes the second machine learning model to process the first prompt and the third description information, to obtain the second prediction information output by the second machine learning model. The device on which the second machine learning model is deployed sends, to the first device, the second prediction information corresponding to the third description information. Correspondingly, the first device can obtain the second prediction information corresponding to the third description information.

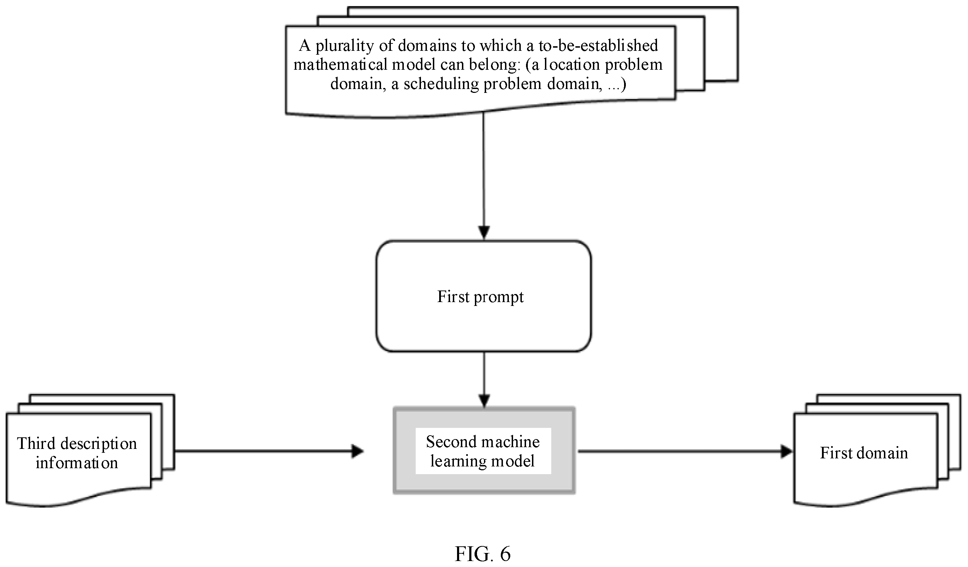

For more intuitive understanding of this solution, FIG. 6 is a diagram of obtaining the second prediction information by using a large model according to an embodiment of this application. As shown in FIG. 6, the first prompt may be determined based on a plurality of domains (that is, a location problem domain, a scheduling problem domain, ... shown in FIG. 6) to which the to-be-established mathematical model can belong. The first prompt may be the "prompt" shown in FIG. 6: "Based on the given background description, select a domain most matching the background description of the operations optimization problem from {the location problem domain, the scheduling problem domain, the order fulfillment domain, the supply chain domain, the packing problem domain, the transport domain, the resource assignment domain, the revenue management domain, and the production planning problem domain}. The background description of the operations optimization problem is the third description information.

The first prompt and the third description information are input into the second machine learning model in the large model form, to obtain the second prediction information output by the second machine learning model in the large model form. The second prediction information indicates the first domain corresponding to the third description information, that is, indicates the first domain corresponding to the first operations optimization problem. It should be understood that the example in FIG. 6 is merely for ease of understanding this solution, and is not intended to limit this solution.

In another case, the second machine learning model that has performed a training operation may be deployed on the first device, and the second machine learning model is a machine learning model for executing a text processing task. For example, the second machine learning model is used to determine, from the plurality of domains to which the operations optimization problem can belong, the domain most matching the input description information. The first device may input the first description information into the second machine learning model, to obtain the second prediction information that is output by the second machine learning model and that corresponds to the first description information, where the second prediction information indicates the first domain corresponding to the first description information.

It should be noted that the first device may alternatively determine, in another manner, the domain to which the to-be-established mathematical model belongs. The example in this embodiment of this application is merely for ease of understanding of this solution, and is not intended to limit this solution.

In this embodiment of this application, all operations optimization problems are divided into a plurality of domains, that is, the plurality of domains to which the to-be-established mathematical model can belong are obtained. After a domain to which the to-be-established mathematical model belongs is determined, at least one problem for obtaining detailed description information of the first operations optimization problem is determined based on the domain to which the first operations optimization problem belongs, that is, different problems are used for obtaining description information of operations optimization problems in different domains. It can be learned from the foregoing description that, in this solution, the problem for obtaining the description information of the operations optimization problem is managed with greater refinement, thereby helping obtain more accurate description information and further helping obtain a more accurate mathematical model.

402: Output at least one first problem, and obtain at least one answer based on the at least one first problem, where the at least one answer is for obtaining first description information, the first description information is description information for describing a first operations optimization problem, and the first problem is a problem for obtaining the description information of the first operations optimization problem.

In this embodiment of this application, step 402 is an optional step. It should be understood that the first description information is description information for describing the first operations optimization problem, and the first mathematical model is for resolving the first operations optimization problem. In this application, the first description information is for replacing the specific first operations optimization problem in a conventional technology, thereby alleviating, to some extent, a difficulty that the user cannot accurately determine the first operations optimization problem. Therefore, before performing the step of generating the mathematical model corresponding to the first operations optimization problem, to obtain detailed first description information of the first operations optimization problem, the first device may obtain an answer to each target problem in at least one problem (hereinafter referred to as a "target problem" for ease of description) corresponding to the first operations optimization problem. The first description information may include an answer to the at least one target problem, and the at least one target problem corresponding to the first operations optimization problem may be first determined.

For example, the at least one target problem may include at least one first problem output to the user. Optionally, the at least one target problem may further include a second problem. For example, the first problem is a problem output by the first device to the user, and the second problem is a problem other than the first problem in the at least one target problem. For example, the answer to the second problem may be obtained based on the second description information actively input by the user to the first device.

For a specific implementation in which the first device determines the at least one problem corresponding to the first operations optimization problem, because step 401 is an optional step, in an implementation, if step 401 is performed, the first device may determine, based on the first domain obtained in step 401, the at least one target problem corresponding to the first domain to which the first operations optimization problem belongs, that is, obtain the at least one target problem corresponding to the first operations optimization problem.

In a case, the first device may store at least one problem set. The at least one problem set includes a problem set corresponding to each of at least one domain to which the operations optimization problem can belong, and each of the at least one problem set includes at least one problem. Optionally, the at least one problem set is in a one-to-one correspondence with the at least one domain to which the operations optimization problem can belong. The first device may obtain, from the at least one problem set, a first problem set corresponding to the first domain to which the first operations optimization problem belongs. In other words, the first problem set corresponding to the first operations optimization problem exists in the at least one problem set, and the first problem set includes the at least one target problem.

In another case, after determining the first domain to which the first operations optimization problem belongs, the first device may generate the first problem set corresponding to the first domain, that is, obtain the first problem set corresponding to the first operations optimization problem.

In another implementation, if step 401 is not performed, the first device may store a second problem set including at least one problem, or after determining that a mathematical model corresponding to an operations optimization problem needs to be established, the first device may generate a second problem set including at least one problem. The second problem set may correspond to an operations optimization problem belonging to any domain. That is, regardless of the domain to which the operations optimization problem for which the first device needs to establish a mathematical model belongs, the first device may use the problem in the second problem set. The at least one problem included in the second problem set may also be understood as at least one target problem corresponding to the first operations optimization problem.

Optionally, the first problem set (or the second problem set) may further include a correct answer to each target problem, that is, the first problem set (or the second problem set) may further include an answer template of each target problem.

For example, a data form used by each of the at least one problem set may be any one of the following: a directed graph, a list, a table, an undirected graph, another data form, or the like. A specific data form to be used may be flexibly determined with reference to an actual application scenario. This is not limited in this embodiment of this application.

For example, when the first problem set (or the second problem set) is represented in a data form of a directed graph, each target problem in the first problem set (or the second problem set) is used as a point in the directed graph, and a correct answer to each target problem in the first problem set (or the second problem set) is used as an edge in the directed graph, and a connection relationship between different points in the directed graph is determined based on an association relationship between a plurality of target problems in the first problem set (or the second problem set).

When the first problem set (or the second problem set) uses a data form of a directed graph, an arrow in the directed graph may indicate an order of appearance between at least two different target problems in the plurality of target problems when the plurality of target problems in the first problem set (or the second problem set) are provided to the user.

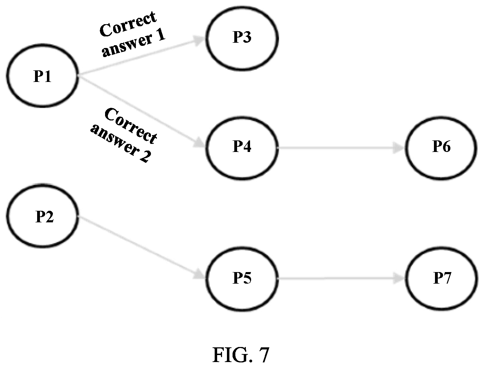

For more intuitive understanding of this solution, FIG. 7 is a diagram of a plurality of target problems in a form of a directed graph according to an embodiment of this application. In FIG. 7, that the first problem set (or the second problem set) includes seven target problems P1 to P7 is used as an example. In FIG. 7, each target problem is used as a point in the directed graph, and a correct answer to each target problem is used as an edge in the directed graph.

When the seven target problems P1 to P7 are displayed to the user in an order indicated by an arrow in FIG. 7, a constraint on an order of displaying the four target problems P1, P3, P4, and P6 exists, a constraint on an order of displaying the three target problems P2, P5, and P7 exists, and no constraint on an order between displaying the "four target problems P1, P3, P4, and P6" and displaying the "three target problems P2, P5, and P7" exists. As shown in FIG. 7, a display order of P1 is earlier than that of P3 and P4, and a display order of P4 is earlier than that of P6. When an answer obtained for the target problem P1 is a correct answer 1, P3 is triggered to be displayed to the user, and P4 and P6 do not need to be displayed; or when an answer obtained for the target problem P1 is a correct answer 2, P4 is triggered to be displayed to the user, and P3 does not need to be displayed. A display order of P2 needs to be earlier than a display order of P5, and the display order of P5 needs to be earlier than a display order of P7. It should be understood that the example in FIG. 7 is merely for ease of understanding this solution, and is not intended to limit this solution.

In this embodiment of this application, if the first problem set is prestored, which first problems are output to the user can be determined based on the prestored first problem set. This helps improve a speed of a process of "determining which first problems are output", and helps obtain a mathematical model corresponding to an operations optimization problem more efficiently.

The problems included in the first problem set are stored in the data form of the directed graph, so that the order of appearance between the at least two different problems in the first problem set can be indicated. Because an association relationship may exist between different problems in the at least one problem corresponding to the first operations optimization problem, using the data form of the directed graph can better reflect a logical relationship between the different problems, making a questioning process more logical for the user, and helping avoid outputting useless problems to the user, thereby improving user stickiness of this solution.

For example, step 402 may include: The first device may output the first problem to the user, further determine content replied by the user to each of the at least one first problem as at least one answer, and determine the first description information based on the at least one answer. Optionally, if the first device further obtains second description information input by the user, and the second description information carries description information of the first operations optimization problem, the first device may further determine that answers to which second problems in the at least one target problem are carried in the second description information, and further determine, based on the at least one target problem and the second problem to which the answer has been obtained, which first problems are output to the user.

Further, in an implementation, after determining the first problem set (or the second problem set) corresponding to the first operations optimization problem, that is, after determining the at least one target problem included in the first problem set (or the second problem set), the first device may output the at least one first problem to the user for the first time, to obtain an answer input by the user for each first problem output for the first time.

For example, a specific implementation of "outputting the first problem to the user" may be displaying the first problem by using a display, playing the first problem in a voice form, or in another output manner. A specific output manner may be flexibly determined with reference to an actual application scenario. This is not limited in this application. In this embodiment of this application, only "displaying the first problem by using the display" is used as an example to describe a detailed time process of "displaying the first problem and obtaining an answer to the first problem". For a specific implementation of using another output manner, refer to understanding. Details are not described one by one in this embodiment of this application.

In a case, if the data form used by the first problem set (or the second problem set) is a directed graph, the first device may determine, based on an order of appearance indicated by the directed graph, each first problem displayed to the user for the first time by using the display. Alternatively, when the data form used by the first problem set (or the second problem set) is another data form that can indicate an order of appearance of the at least two different target problems, the first device may determine, based on the order of appearance indicated by the another data form, the at least one first problem displayed to the user for the first time.

For more intuitive understanding of this solution, an example is provided herein with reference to FIG. 7. The at least one first problem displayed to the user for the first time by using the display may include two target problems P1 and P2, or the at least one first problem displayed to the user by using the display may be the target problem P1, or the at least one first problem displayed to the user by using the display may be the target problem P2. It should be understood that the example provided herein with reference to FIG. 7 is merely for ease of understanding this solution, and is not intended to limit this solution.

In another case, if the data form used by the first problem set (or the second problem set) is a list, a table, an undirected graph, or another data form that does not indicate an order of appearance between different target problems, the at least one first problem displayed to the user for the first time may include any one or more target problems in the first problem set (or the second problem set).

Optionally, in a scenario, if the first device obtains, before determining the first problem displayed to the user for the first time, second description information input by the user, and the second description information carries description information of the first operations optimization problem, the first device may determine that answers to which second problems in the at least one target problem are carried in the second description information, and further determine, based on the at least one target problem and the second problem, the first problem displayed to the user for the first time. In addition/Alternatively, in another scenario, in a process in which the first device displays the first problem to the user for a plurality of times, the first device obtains the second description information input by the user, and the first device may also determine that answers to which second problems in the at least one target problem are carried in the second description information, and further determine, based on the at least one target problem and the second problem, the first problem further displayed to the user.

Specifically, the first device may implement "outputting the first problem and obtaining an answer to the first problem" in a plurality of implementations. For example, in an implementation, the first device displays each first problem to the user by using the display, and also may display an answer option corresponding to each first problem. When obtaining a selection operation input by the user by using the display for an answer option (hereinafter referred to as a "first answer option" for ease of description), the first device may obtain a correct answer corresponding to the first answer option, that is, a correct answer to a first problem (hereinafter referred to as a "third problem" for ease of differentiation) in all first problems displayed for the first time is obtained.

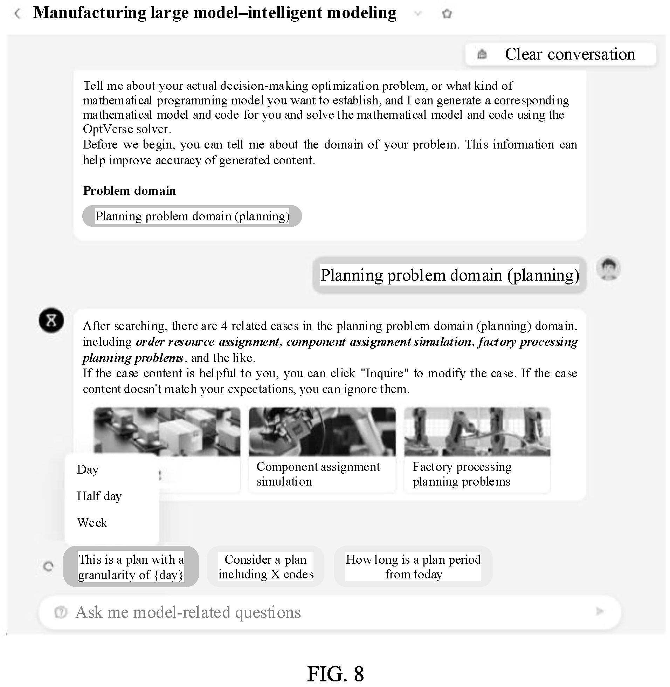

For more intuitive understanding of this solution, FIG. 8 is a diagram of "displaying a first problem" and "obtaining an answer to the first problem" according to an embodiment of this application. As shown in FIG. 8, after determining that the domain to which the first operations optimization problem belongs is the "planning problem domain", the first device displays three first problems to the user by using a display. The three first problems respectively relate to a granularity of a plan, a quantity of codes included in the plan, and a total length of a plan period. When the user selects a first problem (for example, hovers a cursor over a first problem), the first device may be triggered to display an answer option of the first problem. As shown in FIG. 8, when the first device determines that the cursor hovers over the first problem "This is a plan with a granularity of {day}", the first device may be triggered to display three answer options of the first problem "This is a plan with a granularity of {day}". (that is, "day", "half day", and "week" in FIG. 8). The user may tap an answer option in the three answer options to input a selection operation on the answer option.

Optionally, refer to FIG. 8. After determining the first domain, the first device may further display at least one historical case in the planning problem domain to the user. The at least one historical case is a mathematical model established for an operations optimization problem in the planning problem domain.

It should be noted that the example provided herein with reference to FIG. 8 is merely for ease of understanding this solution. "Triggering display of an answer option" and "inputting a selection operation for an answer option by using a display" may alternatively use other manners. For example, the first device may directly display all answer options of each first problem while displaying each first problem. For example, the user may drag an answer option to an area in which the first problem is located to input a selection operation for the answer option. A specific implementation may be flexibly determined with reference to an actual application scenario. This is not limited in this application.

In another implementation, after displaying the at least one first problem to the user for the first time by using the display, the first device may obtain a first answer input by the user by using a text box, and the first device may obtain first matching results between the first answer and all correct answers to all first problems displayed for the first time. The first device may determine, based on the first matching result, a correct answer to one or more third problems in all the first problems displayed for the first time, or the first device may determine, based on the first matching result, that the correct answer to any first problem in all the first problems displayed for the first time is not obtained.

Optionally, the first device may obtain, by using a third machine learning model, the first matching results between the first answer and all correct answers to all first problems displayed for the first time. For example, in a case, if the third machine learning model is specifically represented as a large model, the third machine learning model, the second machine learning model, and the first machine learning model may be a same machine learning model, or may be different machine learning models. The first device may send the first answer, all the first problems displayed for the first time, and all the correct answers to all the first problems displayed for the first time to a device on which the third machine learning model in a large model form is deployed. The device invokes the third machine learning model in the large model form to process the first answer, all the first problems displayed for the first time, and all the answers to all the first problems displayed for the first time, to obtain the first matching result generated by the third machine learning model in the large model form. The device on which the third machine learning model in the large model form is deployed sends the first matching result to the first device.

For example, the device may input all the first problems displayed for the first time and all the answers to all the first problems displayed for the first time into the third machine learning model in the large model form, and input "which correct answers to which problems in all the first problems displayed for the first time are included in the first answer" into the third machine learning model in the large model form, to trigger processing of the first answer, all the first problems displayed for the first time, and all the answers to all the first problems displayed for the first time by using the third machine learning model in the large model form, to obtain the first matching result. It should be understood that the example herein is merely used to prove implementability of this solution, and is not intended to limit this solution.

If the first matching result is used to notify the first device that the first answer and a correct answer (hereinafter referred to as a "first correct answer" for ease of description) to the one or more third problems meet a first matching condition, the first device may determine the first answer as the correct answer to the one or more third problems. If the first matching result is used to notify the first device that the first answer and a correct answer to any first problem in all the first problems displayed for the first time do not meet the first matching condition, the first device may determine that the correct answer to any first problem in all the first problems displayed for the first time is not obtained.

In another case, a third machine learning model on which a training operation has been performed may be deployed on the first device. The first device inputs the first answer and all correct answers to all the first problems displayed for the first time into the third machine learning model, to obtain a first matching result output by the third machine learning model. The first matching result indicates a similarity between the first answer and each correct answer of all the correct answers to all the first problems displayed for the first time.

The first device may determine, based on the first matching result, whether a similarity between the first answer and a correct answer to at least one first problem in all the first problems displayed for the first time meets a first similarity. When the first device determines that a similarity between the first answer and the first correct answer to the one or more third problems meets the first similarity, the first answer may be determined as the correct answer to the one or more third problems. Alternatively, when the first device determines that similarities between the first answer and all the correct answers to all the first problems displayed for the first time do not meet the first similarity, the first device may determine that the correct answer to any first problem in all the first problems displayed for the first time is not obtained.

Alternatively, the first device may further use another algorithm to calculate the similarities between the first answer and all the answers to all the first problems displayed for the first time. For example, the first device determines the similarities between the first answer and all the answers to all the first problems displayed for the first time by calculating cosine similarities, Euclidean distances, L1 distances, or the like between the first answer and all the answers to all the first problems displayed for the first time, and further determines an answer to which problem or problems included in the first answer. The examples of the plurality of implementations are merely used to prove implementations of this solution, and are not intended to limit this solution.

In another implementation, the first device displays at least one first problem for the first time to the user by using the display, and also displays an answer option corresponding to each first problem, and displays, by using the display, a text box for obtaining an answer to the first problem to the user, so that the user can input a selection operation for an answer option, or the user may input an answer by using a text box, and further the first device obtains, based on an operation of the user, an answer to at least one third problem in all the first problems displayed for the first time. It should be noted that, for specific implementations of "determining the answer to the third problem based on the selection operation input by the user for the answer option" or "determining the answer to the third problem based on the text description input by the user", refer to descriptions of the foregoing two implementations, and details are not described herein again.

After outputting the at least one first problem to the user for the first time and further determining that the answer to the at least one third problem is obtained (or determining that the answer to any problem is not obtained), the first device may determine, based on all target problems included in the first problem set (or the second problem set), that correct answers to which problems in all the target problems included in the first problem set (or the second problem set) have not been obtained, and further determine which first problems need to be further output to the user. The first device repeatedly performs the foregoing steps at least once until the correct answers to all the target problems in the first problem set (or the second problem set) are obtained, and stops outputting the first problem to the user. That is, the first device obtains first description information, where the first description information includes the correct answer to the at least one target problem. Both the "first problem" and the "third problem" are problems in the plurality of target problems, and a difference lies in that the "first problem" represents a problem output to the user, and the "third problem" represents a problem to which correct answer has been obtained.

It should be noted that for specific implementations of "the first device each time determines the first problem output to the user", "how to output the first problem to the user", and "determining that answers to which third problems are obtained", refer to the descriptions of specific implementations of "outputting the first problem to the user for the first time and obtaining an answer", and details are not described herein again.

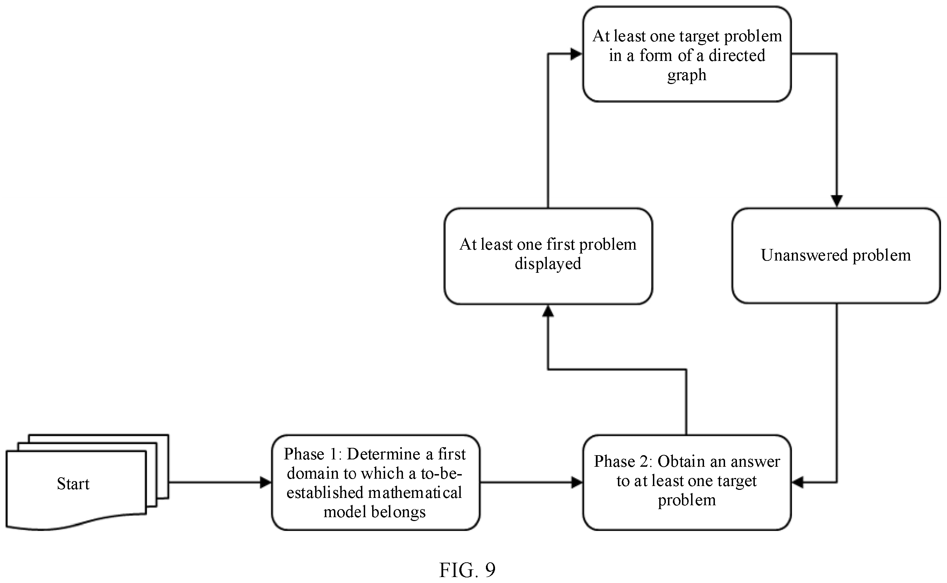

For more intuitive understanding of this solution, FIG. 9 is a diagram of obtaining first description information corresponding to at least one problem according to an embodiment of this application. As shown in FIG. 9, in phase 1, after determining that a first mathematical model corresponding to a first operations optimization problem needs to be generated, the first device may first determine a first domain to which a to-be-established mathematical model belongs, and then determine at least one target problem corresponding to the operations optimization problem in the first domain.

In phase 2, the first device may obtain an answer to the at least one target problem, that is, obtain the first description information. In FIG. 9, that the at least one target problem is stored in a form of a directed graph is used as an example. The first device may determine, based on an indication of the directed graph, at least one first problem output to the user for the first time, to obtain a correct answer to at least one third problem. The first device determines which third problems in the at least one target problem have been answered (that is, correct answers to which third problems are obtained), thereby determining that answers to which problems in the at least one target problem have not been obtained, and further determines, based on the indication of the directed graph, the at least one first problem output to the user again. The first device may repeat the foregoing operations at least once to obtain the first description information. It should be understood that the example in FIG. 9 is merely for ease of understanding this solution, and is not intended to limit this solution.

In this embodiment of this application, the at least one first problem is output to the user, to obtain an answer to each problem, and further the first description information is determined based on the answer to each first problem, that is, the answer to the at least one problem corresponding to the first operations optimization problem is obtained in a guided manner. This helps obtain the description information of the first operations optimization problem more efficiently, and also helps obtain more accurate first description information, thereby helping obtain a more accurate mathematical model.

Optionally, before outputting the first problem to the user for the first time, or in a process of outputting the first problem to the user for a plurality of times, the first device may further obtain second description information actively input by the user; or after outputting the first problem to the user, the first device obtains second description information actively input by the user, where the second description information carries the description information of the first operations optimization problem.

The first device may further and the first device may combine the first description information and the second description information to obtain a union set of the first description information and the second description information (hereinafter referred to as "updated first description information" for ease of description), and may further determine the first information in a subsequent step based on the updated first description information. The first information includes the updated first description information, that is, the first information includes the first description information and the second description information.

403: Determine at least one first case from at least one case based on a similarity between the first description information and each piece of description information included in the at least one case, where the first device stores the at least one case, any one of the at least one case includes description information and a mathematical model that correspond to an operations optimization problem, and a similarity between the first description information and description information included in the first case meets a preset condition.

In this embodiment of this application, step 403 is an optional step. It should be understood that a concept of "description information" included in a target case is similar to a concept of the "first description information", and both are description information for describing the operations optimization problem. A concept of a "mathematical model" included in the target case is similar to a concept of the "first mathematical model". A difference lies in that the description information and the mathematical model included in the target case are already stored in the first device, the first description information is being obtained, and the first mathematical model needs to be generated by using the first machine learning model.

After obtaining the first description information (or the updated first description information), the first device may further obtain description information (hereinafter referred to as "fourth description information" for ease of description) included in each of the at least one case stored in the first device, that is, at least one piece of fourth description information that is in a one-to-one correspondence with the at least one case can be obtained, thereby obtaining a similarity between the first description information (or the updated first description information) and the fourth description information included in each of the at least one case. For example, each of the at least one case (that is, including the target case) may be represented in a form of <description information, mathematical model>, and the "description information" and "mathematical model" included in each case correspond to a same operations optimization problem.

Because step 401 and step 402 are both optional steps, if step 401 and step 402 are performed, the first description information used in step 403 may be obtained by performing step 401 and step 402. If step 401 and step 402 are not performed, the at least one target problem corresponding to the first operations optimization problem may not exist, the first description information may also include a segment of description information input by the user, and the first description information at least indicates that the mathematical model corresponding to the operations optimization problem needs to be generated.

The first device may implement "obtaining the similarity between the first description information and the fourth description information included in each of the at least one case" in a plurality of manners. In an implementation, the first device may obtain initial feature information of the first description information (or updated first description information) and initial feature information of the fourth description information included in each of the at least one case. For example, the initial feature information of the first description information is obtained by embedding (embedding) the first description information (or the updated first description information), and the initial feature information of the fourth description information is obtained by embedding the fourth description information. The first device may generate first similarity information, where the first similarity information includes the similarity between the initial feature information of the first description information and the initial feature information of each of the at least one piece of fourth description information.

Optionally, the initial feature information of the first description information and the initial feature information of the fourth description information may be obtained by using a fourth machine learning model. In a case, if the fourth machine learning model is specifically represented as a large model, the fourth machine learning model, the third machine learning model, the third machine learning model, and the first machine learning model may be a same machine learning model, or may be different machine learning models. For example, the first device may send the first description information (or the updated first description information) and all fourth description information included in the at least one case to a device on which the fourth machine learning model in a large model form is deployed, to process the first description information (or the updated first description information) and each piece of fourth description information by using the fourth machine learning model in the large model form, and obtain the initial feature information of the first description information and the initial feature information of each piece of fourth description information that are output by the fourth machine learning model in the large model form.

For example, the device on which the fourth machine learning model in the large model form is deployed may input "Please embed the first description information" into the fourth machine learning model, to trigger processing of the first description information by using the fourth machine learning model in the large model form, and obtain the initial feature information of the first description information. For a manner of obtaining the "initial feature information of the fourth description information", refer to the foregoing descriptions. Details are not described herein again. It should be understood that the example herein is merely used to prove implementability of this solution, and is not used to limit this solution.

In another case, the fourth machine learning model may alternatively be deployed on the first device. The first device separately inputs the first description information (or the updated first description information) and each piece of fourth description information into the fourth machine learning model, and performs embedding on the first description information (or the updated first description information) and each piece of fourth description information by using the fourth machine learning model, to obtain the initial feature information of the first description information and the initial feature information of each piece of fourth description information.

The first device may obtain the first similarity information in a plurality of manners. For example, the first device may determine the first similarity information based on a cosine similarity between the initial feature information of the first description information and the initial feature information of each piece of fourth description information. For another example, the "cosine similarity" may be replaced with a "Euclidean distance", a "Mahalanobis distance", an "L1 distance", or another algorithm for calculating a similarity. Specifically, the "cosine similarity" may be determined with reference to an actual application scenario, and is not exhaustive in this embodiment of this application.

In another implementation, the first device may obtain second information, where the second information includes at least one of an abstract and a keyword of the first description information (or the updated first description information). For example, a fifth machine learning model may be deployed on the first device. The first device inputs the first description information into the fifth machine learning model, and extracts, by using the fifth machine learning model, the abstract and/or the keyword of the first description information, to obtain the second information output by the fifth machine learning model. It should be noted that this example is merely used to prove implementability of this solution. The foregoing steps may alternatively be implemented by using a large model, and other implementations are not enumerated herein.

After obtaining the second information, the first device may determine a similarity between the second information and the fourth description information included in each of the at least one case. The similarity between the second information and the fourth description information included in each of the at least one case is used as a similarity between the first description information and the fourth description information included in each of the at least one case.

For example, in a case, the first device may obtain initial feature information of the second information and the initial feature information of each piece of fourth description information, and may further generate second similarity information. The second similarity information includes a similarity between the initial feature information of the second information (that is, the abstract and/or the keyword of the first description information) and the initial feature information of each piece of fourth description information, that is, the similarity between the first description information and the fourth description information included in each of the at least one case is obtained. It should be noted that, for a specific manner of obtaining the "initial feature information of the second information", refer to the foregoing description of the specific manner of obtaining the "initial feature information of the first description information" and the "initial feature information of the fourth description information". For a specific manner of obtaining the "second similarity information", refer to the foregoing description of the specific manner of obtaining the "first similarity information". Details are not described herein again.

In another case, the first device may further obtain third information corresponding to each piece of fourth description information, that is, obtain at least one piece of third information that is in a one-to-one correspondence with the at least one piece of fourth description information, where each piece of third information includes an abstract and/or a keyword of one piece of fourth description information. The first device obtains the initial feature information of the second information and initial feature information of each piece of third information, and may further generate third similarity information, where the third similarity information includes a similarity between the initial feature information of the second information and the initial feature information of each piece of third information. The similarity between the initial feature information of the second information and the initial feature information of each piece of third information may be used as a similarity between the second information and each piece of fourth description information, that is, may be used as a similarity between the first description information and each piece of fourth description information.

In this embodiment of this application, because the first description information may include text information input by the user, and the text information input by the user may carry invalid information, the abstract and/or the keyword of the first description information is first obtained, that is, the invalid information in the first description information is filtered out, and then a similarity between the abstract and/or the keyword of the first description information and fourth description information is generated. This helps obtain more accurate similarity information, and further helps obtain a more matched first case.

In another implementation, after obtaining the first description information (or the updated first description information) in a text form, the first device may further convert the text form into a graph form, where the at least one target problem is used as a point of the first description information (or the updated first description information) in the graph form, and a correct answer to each target problem included in the first description information (or the updated first description information) is used as an edge of the first description information (or the updated first description information) in the graph form. The first device may obtain initial feature information of the first description information in the graph form and the initial feature information of each piece of fourth description information, and further generate fourth similarity information, where the fourth similarity information includes a similarity between the initial feature information of the first description information in the graph form and the initial feature information of each piece of fourth description information, and the similarity between the initial feature information of the first description information in the graph form and the initial feature information of each piece of fourth description information is used as the similarity between the first description information and each piece of fourth description information.

It should be noted that the first device may further obtain, in another manner, the similarity between the first description information (or the updated first description information) and the fourth description information included in each of the at least one case. The foregoing examples of the plurality of specific implementations of the foregoing steps are merely for ease of understanding, and are not intended to limit this solution.

For example, after determining the similarity between the first description information (or the updated first description information) and the fourth description information included in each of the at least one case, the first device may determine, from the at least one piece of fourth description information that is in a one-to-one correspondence with the at least one case, K pieces of fourth description information whose similarity to the first description information (or the updated first description information) meets a preset condition, and can further obtain a first case to which each of the K pieces of fourth description information belongs, that is, K first cases are selected from the at least one case, where a similarity between the first description information and the fourth description information included in each of the K first cases meets the preset condition, and K is an integer greater than or equal to 1.

The similarity between each of the K pieces of fourth description information and the first description information (or the updated first description information) is greater than or equal to a similarity threshold, and/or the K pieces of fourth description information include K pieces of fourth description information that are most similar to the first description information (or the updated first description information) in the at least one piece of fourth description information.

For example, the similarity threshold may be 80 percent, 85 percent, 90 percent, another value, or the like. This is not limited in this embodiment of this application.

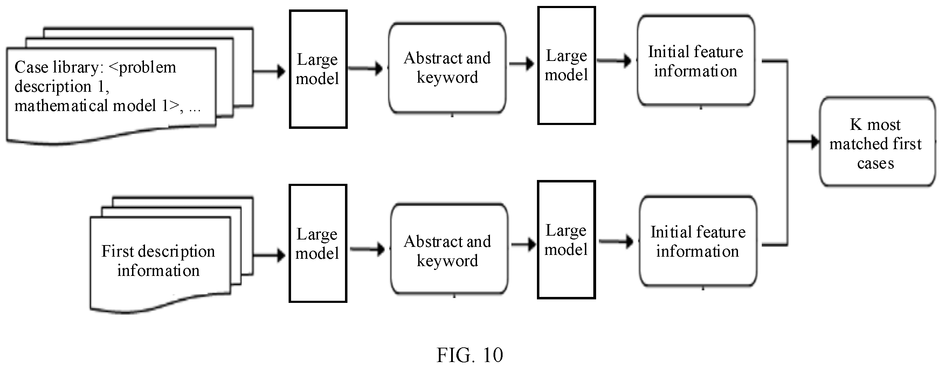

For more intuitive understanding of this solution, FIG. 10 is a schematic flowchart of determining at least one first case from at least one case according to an embodiment of this application. An icon in FIG. 10 represents a machine learning model in a large model form. An abstract and a keyword of each piece of fourth description information in a case library may be generated by using the machine learning model in the large model form, and then initial feature information of the abstract and the keyword of each piece of fourth description information is generated by using the machine learning model in the large model form.

Alternatively, an abstract and a keyword of the first description information may be generated by using the machine learning model in the large model form, and then initial feature information of the abstract and the keyword of the first description information is generated by using the machine learning model in the large model form.

K pieces of fourth description information most similar to the first description information is determined based on the initial feature information of the abstract and the keyword of the first description information, and the initial feature information of the abstract and the keyword of each piece of fourth description information. Because each of the K pieces of fourth description information belongs to one case in the case library, K first cases most matching the first description information is obtained. It should be understood that the example in FIG. 10 is merely for ease of understanding, and is not intended to limit this solution.

404: Obtain first information based on the first description information and the at least one first case.

In this embodiment of this application, step 404 is an optional step. After determining the K first cases from the at least one case in step 403, the first device may combine the first description information (or the updated first description information) and the K first cases to obtain the first information, to process the first information by using the first machine learning model in a subsequent step. If the first device does not obtain any first case from the at least one case by performing step 403, step 404 may also not be performed. Alternatively, if step 403 is not performed, step 404 may also not be performed.

In this embodiment of this application, the at least one first case most matching the first description information is obtained from the at least one prestored case, and the similarity between the first description information and the description information included in each first case meets the preset condition, and further each first case and the first description information are both used as inputs of the first machine learning model, that is, each first case is used as a reference case of the first machine learning model. This helps the first machine learning model generate a more accurate first mathematical model, and also helps improve efficiency of the first machine learning model in a process of generating the first mathematical model.

405: Input the first information into the first machine learning model, to obtain a first mathematical model corresponding to the first operations optimization problem, where the first information is obtained based on the first description information, the first mathematical model includes an objective function and a constraint, and the first mathematical model is for solving the first operations optimization problem.

In this embodiment of this application, step 403 and step 404 are both optional steps. In a case, if step 403 and step 404 are performed, and the K first cases are determined by performing step 403, the first information may include the K first cases and the first description information. In an implementation, the first machine learning model is a large model. Optionally, the first information includes the first description information (or the updated first description information) and prompt information (hereinafter referred to as a "second prompt" for ease of differentiation). The first device may combine the K first cases into the second prompt in a form of <problem description, mathematical model>, and further obtain the first information.

For example, the K first cases include: {problem description 1, mathematical model 1}, {problem description 2, mathematical model 2}, ..., and {problem description K, mathematical model K}, and the first information may be: "prompt (instruction)": "Please provide a mathematical model in a new operations optimization problem description based on the provided example of <problem description, mathematical model>. Example: {problem description 1, mathematical model 1}, {problem description 2, mathematical model 2}, ..., and {problem description K, mathematical model K}", and "input": "the first description information". It should be understood that the example herein is merely provided for ease of understanding this solution, and is not intended to limit this solution.

"The first device inputs the first information into the first machine learning model" may be understood as that the first device sends the first information to a device on which the first machine learning model is deployed, and further the device on which the first machine learning model can be deployed inputs the first information into the first machine learning model in a large model form. "The first device obtains the first mathematical model corresponding to the first operations optimization problem" may be understood as that the first device receives the first mathematical model corresponding to the first operations optimization problem.

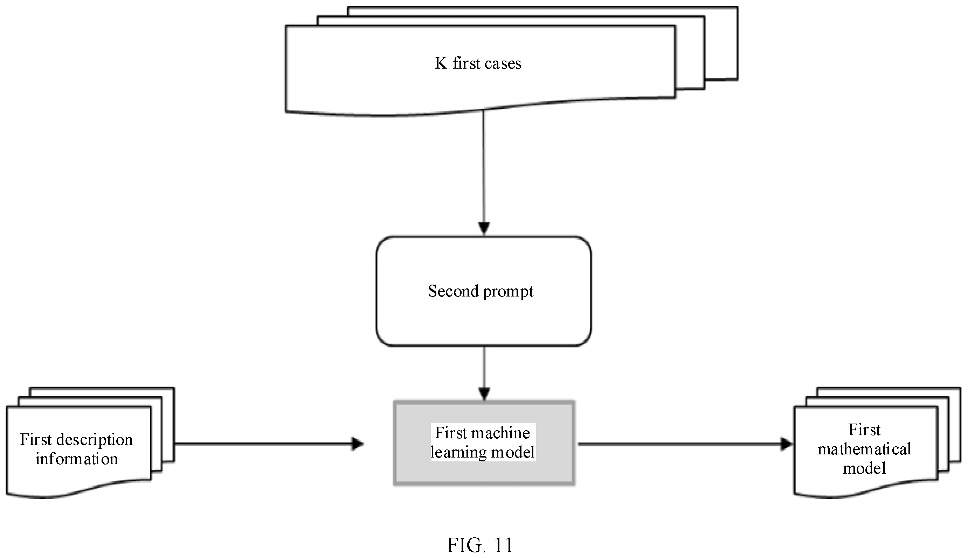

For more intuitive understanding of this solution, FIG. 11 is a schematic flowchart of obtaining the first mathematical model based on the first information according to an embodiment of this application. As shown in FIG. 11, after the K first cases are obtained, the second prompt may be obtained based on the K first cases, and both the second prompt and the first description information belong to the first information. Both the second prompt and the first description information may be input into the first machine learning model in the large model form, to obtain the first mathematical model that is output by the first machine learning model in the large model form and that corresponds to the first operations optimization problem. It should be understood that the example in FIG. 11 is merely for ease of understanding, and is not intended to limit this solution.

In another case, if step 403 and step 404 are not performed, step 405 may be directly performed after step 402 is performed. Alternatively, if step 403 and step 404 are performed, and no first case is determined in step 403, the first information and the first description information may be same information. In this case, "the first device inputs the first information into the first machine learning model" may be understood as that the first device sends the first information to a device on which the first machine learning model is deployed (which may also be understood as the first description information), and further the device on which the first machine learning model can be deployed inputs the first information (which may also be understood as the first description information) into the first machine learning model in the large model form.

After obtaining the first mathematical model corresponding to the first operations optimization problem, the first device may output the first mathematical model to the user by using a display. The output manner includes but is not limited to: displaying the first mathematical model by using the display, outputting a file including the first mathematical model by using the display, or another output manner.

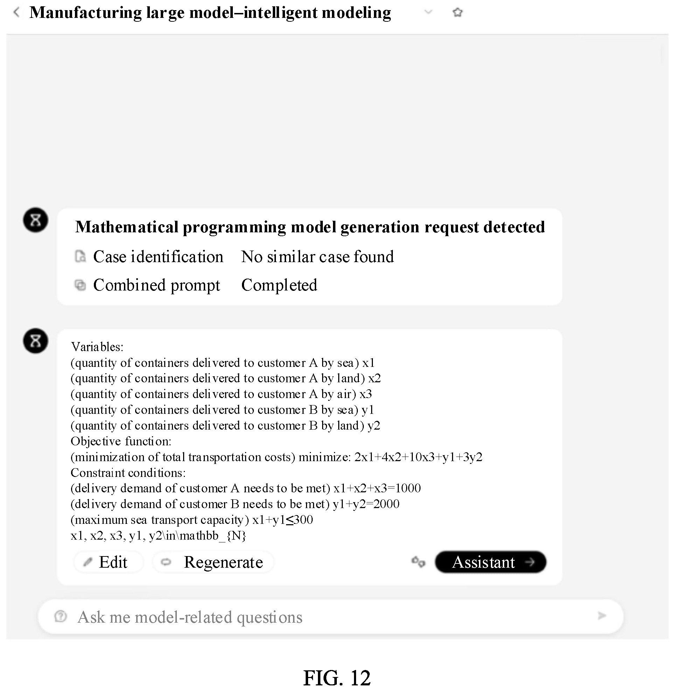

For more intuitive understanding of this solution, FIG. 12 is a diagram of outputting the first mathematical model by using the display according to an embodiment of this application. In FIG. 12, an example of displaying the first mathematical model by using the display is used. As shown in FIG. 12, an objective function and a constraint included in the first mathematical model are shown, and variables involved in the first mathematical model are also shown. Optionally, the first case that is matched based on the first description information may be further displayed by using the display, or the display may be further used to notify the user that no case is matched. It should be understood that the example in FIG. 12 is merely for ease of understanding this solution, and is not intended to limit this solution.

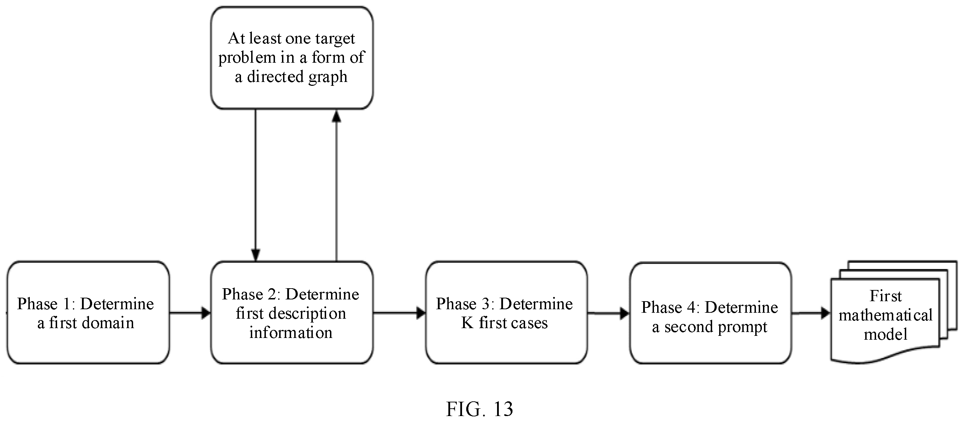

For more intuitive understanding of this solution, FIG. 13 is another diagram of a mathematical model obtaining method according to an embodiment of this application. As shown in FIG. 13, phase 1: Obtain a first domain to which a to-be-established mathematical model belongs. Phase 2: Use a data structure of a directed graph for at least one target problem corresponding to the first domain, and obtain an answer to each first target problem in a guided manner based on the at least one target problem in a form of the directed graph, that is, obtain first description information in a guided manner. Phase 3: Determine K first cases from at least one case based on the first description information. Phase 4: Determine a second prompt based on the K first cases, that is, combine the K first cases into the second prompt. Further, the second prompt and the first description information can be input into a first machine learning model in a large model form, to obtain a first mathematical model generated by the first machine learning model, where the first mathematical model includes an objective function and a constraint. It should be understood that the example in FIG. 13 is merely for ease of understanding this solution, and is not intended to limit this solution.

Optionally, after the first device obtains the first mathematical model, a second device may further solve the first mathematical model to obtain a solution result of the first mathematical model, where the solution result of the first mathematical model is for resolving a first operations optimization problem.

For example, the second device and the first device may be a same device; or the second device and the first device may be different devices. In this case, after obtaining the first mathematical model, the first device may send the first mathematical model to the second device.

For example, when the first domain to which the first operations optimization problem that needs to be resolved belongs is a location problem domain, the solution result of the first mathematical model can indicate which location or locations in a candidate location set are optimal. For another example, when the first domain to which the first operations optimization problem that needs to be resolved belongs is a scheduling problem domain, the solution result of the first mathematical model is used to notify how to arrange a task under a constraint of limited resources, to maximize working efficiency. For another example, when the first domain to which the first operations optimization problem that needs to be resolved belongs is an order fulfillment domain, the solution result of the first mathematical model is used to notify how to arrange order processing and delivery on a premise of a given order, to optimally utilize resources to meet customer demand, and the like. It should be noted that the example herein is merely used to facilitate understanding of a relationship between the "solution result of the first mathematical model" and the "first operations optimization problem", and is not intended to limit this solution.

To have more intuitive understanding of beneficial effects brought by the method provided in this application, the following describes beneficial effects brought by this application with reference to experimental data. The experimental data is shown in Table 1.

**Table 1**

| Involved operations optimization problem type | Test data quantity | Average accuracy | Average time |
|---|---|---|---|
| Component assignment problem | 1000+ | 93% | Less than 1 |
| Order fulfillment problem Logistics capacity planning problem | | | minute |

Refer to the experimental data. It can be learned that, by using the method provided in this application to obtain the mathematical model corresponding to the operations optimization problem, a mathematical model that better adapts to the operations optimization problem can be obtained, that is, accuracy of the obtained mathematical model is improved, and a speed of a process of obtaining the mathematical model is improved.

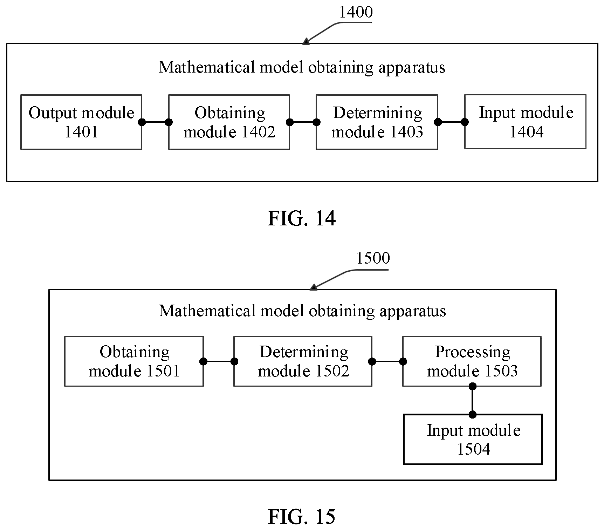

Based on embodiments corresponding to FIG. 1 to FIG. 13, to better implement the foregoing solutions in embodiments of this application, the following further provides related devices configured to implement the foregoing solutions. Specifically, FIG. 14 is a diagram of a structure of a mathematical model obtaining apparatus according to an embodiment of this application. The mathematical model obtaining apparatus 1400 includes: an output module 1401, configured to output at least one first problem; an obtaining module 1402, configured to obtain at least one answer based on the at least one first problem, where the at least one answer is for obtaining first description information, the first description information is description information for describing a first operations optimization problem, and the first problem is a problem for obtaining the description information of the first operations optimization problem; a determining module 1403, configured to determine first information based on the first description information; and an input module 1404, configured to input the first information into a machine learning model, to obtain a first mathematical model, where the first mathematical model includes an objective function and a constraint, and the first mathematical model is for solving the first operations optimization problem.

Optionally, the at least one first problem is determined based on a prestored first problem set.

Optionally, the first problem set is represented in a data form of a directed graph, and the data form of the directed graph indicates an order of appearance between at least two different problems in the first problem set.

Optionally, the obtaining module 1402 is further configured to obtain second description information, where the first problem set includes the at least one first problem and a second problem corresponding to the second description information, the second description information is obtained through a user input, the second problem is a problem for obtaining the description information of the first operations optimization problem, and the second description information includes an answer to the second problem; and the determining module 1403 is specifically configured to determine the first information based on the first description information and the second description information, where the first information includes the first description information and the second description information.

Optionally, the mathematical model obtaining apparatus 1400 is applied to a first device, the first device stores at least one case, and any one of the at least one case includes description information and a mathematical model that correspond to an operations optimization problem. The determining module 1403 is specifically configured to: determine at least one first case from the at least one case based on a similarity between the first description information and each piece of description information included in the at least one case, where a similarity between the first description information and description information included in the first case meets a preset condition; and obtain the first information based on the first description information and the at least one first case.

Optionally, the obtaining module 1402 is further configured to obtain second information, where the second information includes at least one of an abstract of the first description information and a keyword of the first description information; and the determining module 1403 is further configured to determine a similarity between the second information and each piece of description information included in the at least one case, where the similarity between the second information and each piece of description information included in the at least one case is used as the similarity between the first description information and each piece of description information included in the at least one case.

Optionally, the determining module 1403 is further configured to determine a domain to which a to-be-established mathematical model belongs; the determining module 1403 is further configured to determine the first problem set from at least one prestored problem set based on the domain to which the to-be-established mathematical model belongs, where the at least one prestored problem set is in a one-to-one correspondence with at least one domain; and the determining module 1403 is further configured to determine the at least one first problem based on the first problem set.

Optionally, the domain to which the to-be-established mathematical model belongs includes any one of the following: a location problem domain, a scheduling problem domain, an order fulfillment domain, a supply chain domain, a packing problem domain, a transport domain, a resource assignment domain, a revenue management domain, or a production planning problem domain.

It should be noted that content such as information exchange and an execution process between the modules/units in the mathematical model obtaining apparatus 1400 is based on a same concept as that of the method embodiments corresponding to FIG. 1 to FIG. 13 in this application. For specific content, refer to the descriptions in the foregoing method embodiments of this application. Details are not described herein again.

Further, FIG. 15 is a diagram of another structure of a mathematical model obtaining apparatus according to an embodiment of this application. The mathematical model obtaining apparatus 1500 is applied to a first device, the first device stores at least one case, any one of the at least one case includes description information and a mathematical model that correspond to an operations optimization problem, and the mathematical model obtaining apparatus 1500 includes: an obtaining module 1501, configured to obtain first description information, where the first description information is description information for describing a first operations optimization problem; a determining module 1502, configured to determine, based on a similarity between the first description information and each piece of description information included in the at least one case, at least one second mathematical model from at least one mathematical model included in the at least one case, where the second mathematical model belongs to a first case in the at least one case, and a similarity between the first description information and description information included in the first case meets a preset condition; a processing module 1503, configured to obtain first information based on the first description information and the at least one second mathematical model; and an input module 1504, configured to input the first information into a machine learning model, to obtain a first mathematical model, where the first mathematical model is output by using a display, the first mathematical model includes an objective function and a constraint, and the first mathematical model is for solving the first operations optimization problem.

Optionally, the obtaining module 1501 is specifically configured to obtain the first description information corresponding to at least one first problem, where the first description information includes an answer to each first problem in the at least one first problem, the answer to each first problem in the at least one first problem is for obtaining the first description information, and the first problem is a problem for obtaining the description information of the first operations optimization problem.

It should be noted that content such as information exchange and an execution process between the modules/units in the mathematical model obtaining apparatus 1500 is based on a same concept as that of the method embodiments corresponding to FIG. 1 to FIG. 13 in this application. For specific content, refer to the descriptions in the foregoing method embodiments of this application. Details are not described herein again.

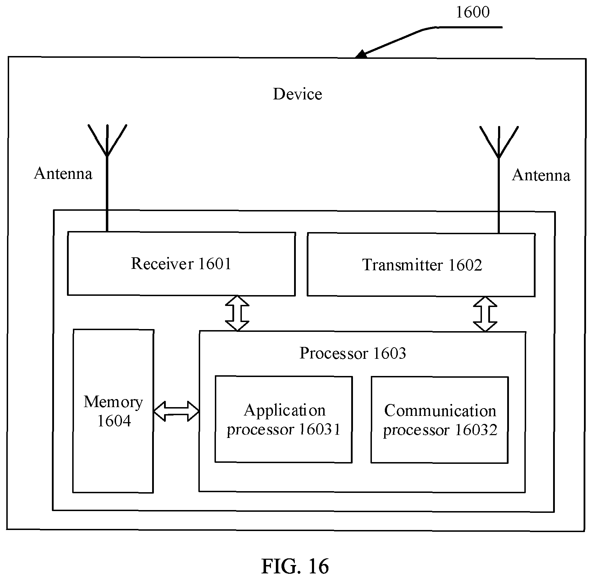

The following describes a device provided in an embodiment of this application. FIG. 16 is a diagram of a structure of the device according to this embodiment of this application. Specifically, the device 1600 includes a receiver 1601, a transmitter 1602, a processor 1603, and a memory 1604 (where there may be one or more processors 1603 in the device 1600, and one processor is used as an example in FIG. 16). The processor 1603 may include an application processor 16031 and a communication processor 16032. In some embodiments of this application, the receiver 1601, the transmitter 1602, the processor 1603, and the memory 1604 may be connected through a bus or in another manner.

The memory 1604 may include a read-only memory and a random access memory, and provide instructions and data to the processor 1603. A part of the memory 1604 may further include a non-volatile random access memory (non-volatile random access memory, NVRAM). The memory 1604 stores a processor and operation instructions, executable modules or data structures, or a subset thereof, or an extended set thereof. The operation instructions may include various operation instructions for implementing various operations.

The processor 1603 controls an operation of the device. During specific application, components of the device are coupled together through a bus system. In addition to a data bus, the bus system may further include a power bus, a control bus, a status signal bus, and the like. However, for a clear description, various types of buses in the figure are referred to as the bus system.

The methods disclosed in embodiments of this application may be applied to the processor 1603 or may be implemented by the processor 1603. The processor 1603 may be an integrated circuit chip and has a signal processing capability. In an implementation process, the steps in the foregoing method may be implemented by using a hardware integrated logic circuit in the processor 1603, or by using instructions in a form of software. The processor 1603 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1603 may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1604, and the processor 1603 reads information in the memory 1604 and completes the steps in the foregoing methods in combination with hardware of the processor.

The receiver 1601 may be configured to: receive input digit or character information, and generate a signal input related to related settings and function control of the device. The transmitter 1602 may be configured to output digit or character information through a first interface. The transmitter 1602 may be further configured to send instructions to a disk group through the first interface, to modify data in the disk group. The transmitter 1602 may further include a display device, for example, a display.

In this embodiment of this application, the processor 1603 is configured to perform the mathematical model obtaining method performed by the first device in the embodiments corresponding to FIG. 1 to FIG. 13. It should be noted that a specific manner of performing the foregoing steps by the application processor 16031 in the processor 1603 is based on a same concept as the method embodiments corresponding to FIG. 1 to FIG. 13 in this application. Technical effects brought by the specific manner are the same as those of the method embodiments corresponding to FIG. 1 to FIG. 13 in this application. For specific content, refer to the descriptions in the method embodiments in this application. Details are not described herein again.

An embodiment of this application further provides a computer-readable storage medium. The computer-readable storage medium stores a program used for signal processing. When the program runs on a computer, the computer is enabled to perform the steps performed by the first device in the method described in the embodiments shown in FIG. 1 to FIG. 13.

An embodiment of this application further provides a computer program product. The computer program product includes a program. When the program runs on a computer, the computer is enabled to perform the steps performed by the first device in the method described in the embodiments shown in FIG. 1 to FIG. 13.

The first device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable the chip to perform the mathematical model obtaining method described in embodiments shown in FIG. 1 to FIG. 13. Optionally, the storage unit is a storage unit in the chip, for example, a register or a cache. Alternatively, the storage unit may be a storage unit that is in a radio access device end and that is located outside the chip, for example, a read-only memory (read-only memory, ROM), another type of static storage device that can store static information and instructions, or a random access memory (random access memory, RAM).

The processor mentioned anywhere above may be a general-purpose central processing unit, a microprocessor, an ASIC, or one or more integrated circuits for controlling program execution of the method according to the first aspect.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk of a computer, a USB flash drive, a removable hard disk drive, a ROM, a RAM, a magnetic disk, or a compact disc, and includes several instructions for instructing a computer device (which may be a personal computer, a first device, a network device, or the like) to perform the methods described in embodiments of this application.

All or a part of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, first device, or data center to another website, computer, first device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, such as a first device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

## Claims

1. A mathematical model obtaining method, wherein the method comprises:
outputting at least one first problem, and obtaining at least one answer based on the at least one first problem, wherein the at least one answer is for obtaining first description information, the first description information is description information for describing a first operations optimization problem, and the first problem is a problem for obtaining the description information of the first operations optimization problem;
determining first information based on the first description information; and
inputting the first information into a machine learning model, to obtain a first mathematical model, wherein the first mathematical model comprises an objective function and a constraint, and the first mathematical model is for solving the first operations optimization problem.

2. The method according to claim 1, wherein the at least one first problem is determined based on a prestored first problem set.

3. The method according to claim 2, wherein the first problem set is represented in a data form of a directed graph, and the data form of the directed graph indicates an order of appearance between at least two different problems in the first problem set.

4. The method according to claim 2 or 3, wherein the method further comprises:
obtaining second description information, wherein the first problem set comprises the at least one first problem and a second problem corresponding to the second description information, the second description information is obtained through a user input, the second problem is a problem for obtaining the description information of the first operations optimization problem, and the second description information comprises an answer to the second problem; and
determining the first information based on the first description information comprises:
determining the first information based on the first description information and the second description information, wherein the first information comprises the first description information and the second description information.

5. The method according to any one of claims 1 to 3, wherein the method is applied to a first device, the first device stores at least one case, any one of the at least one case comprises description information and a mathematical model that correspond to an operations optimization problem, and determining the first information based on the first description information comprises:
determining at least one first case from the at least one case based on a similarity between the first description information and each piece of description information comprised in the at least one case, wherein a similarity between the first description information and description information comprised in the first case meets a preset condition; and
obtaining the first information based on the first description information and the at least one first case.

6. The method according to claim 5, wherein the method further comprises:
obtaining second information, wherein the second information comprises at least one of an abstract of the first description information and a keyword of the first description information; and
determining a similarity between the second information and each piece of description information comprised in the at least one case, wherein the similarity between the second information and each piece of description information comprised in the at least one case is used as the similarity between the first description information and each piece of description information comprised in the at least one case.

7. The method according to claim 2 or 3, wherein before outputting the at least one first problem, the method further comprises:
determining a domain to which a to-be-established mathematical model belongs;
determining the first problem set from at least one prestored problem set based on the domain to which the to-be-established mathematical model belongs, wherein the at least one prestored problem set is in a one-to-one correspondence with at least one domain; and
determining the at least one first problem based on the first problem set.

8. The method according to claim 7, wherein the domain to which the to-be-established mathematical model belongs comprises any one of the following: a location problem domain, a scheduling problem domain, an order fulfillment domain, a supply chain domain, a packing problem domain, a transport domain, a resource assignment domain, a revenue management domain, or a production planning problem domain.

9. A mathematical model obtaining method, wherein the method is applied to a first device, the first device stores at least one case, any one of the at least one case comprises description information and a mathematical model that correspond to an operations optimization problem, and the method comprises:
obtaining first description information, wherein the first description information is description information for describing a first operations optimization problem;
determining, based on a similarity between the first description information and each piece of description information comprised in the at least one case, at least one second mathematical model from at least one mathematical model comprised in the at least one case, wherein the second mathematical model belongs to a first case in the at least one case, and a similarity between the first description information and description information comprised in the first case meets a preset condition;
obtaining first information based on the first description information and the at least one second mathematical model; and
inputting the first information into a machine learning model, to obtain a first mathematical model, wherein the first mathematical model comprises an objective function and a constraint, and the first mathematical model is for solving the first operations optimization problem.

10. The method according to claim 9, wherein obtaining the first description information comprises:
obtaining the first description information corresponding to at least one first problem, wherein the first description information comprises an answer to each first problem in the at least one first problem, the answer to each first problem in the at least one first problem is for obtaining the first description information, and the first problem is a problem for obtaining the description information of the first operations optimization problem.

11. A mathematical model obtaining apparatus, wherein the apparatus comprises:
an output module, configured to output at least one first problem;
an obtaining module, configured to obtain at least one answer based on the at least one first problem, wherein the at least one answer is for obtaining first description information, the first description information is description information for describing a first operations optimization problem, and the first problem is a problem for obtaining the description information of the first operations optimization problem;
a determining module, configured to determine first information based on the first description information; and
an input module, configured to input the first information into a machine learning model, to obtain a first mathematical model, wherein the first mathematical model comprises an objective function and a constraint, and the first mathematical model is for solving the first operations optimization problem.

12. The apparatus according to claim 11, wherein the at least one first problem is determined based on a prestored first problem set.

13. The apparatus according to claim 12, wherein the first problem set is represented in a data form of a directed graph, and the data form of the directed graph indicates an order of appearance between at least two different problems in the first problem set.

14. The apparatus according to claim 12 or 13, wherein
the obtaining module is further configured to obtain second description information, wherein the first problem set comprises the at least one first problem and the second problem corresponding to the second description information, the second description information is obtained through a user input, the second problem is a problem for obtaining the description information of the first operations optimization problem, and the second description information comprises an answer to the second problem; and
the determining module is specifically configured to determine the first information based on the first description information and the second description information, wherein the first information comprises the first description information and the second description information.

15. The apparatus according to any one of claims 11 to 13, wherein the apparatus is applied to a first device, the first device stores at least one case, any one of the at least one case comprises description information and a mathematical model that correspond to an operations optimization problem, and the determining module is specifically configured to:
determine at least one first case from the at least one case based on a similarity between the first description information and each piece of description information comprised in the at least one case, wherein a similarity between the first description information and description information comprised in the first case meets a preset condition; and
obtain the first information based on the first description information and the at least one first case.

16. The apparatus according to claim 15, wherein
the obtaining module is further configured to obtain second information, wherein the second information comprises at least one of an abstract of the first description information and a keyword of the first description information; and
the determining module is further configured to determine a similarity between the second information and each piece of description information comprised in the at least one case, wherein the similarity between the second information and each piece of description information comprised in the at least one case is used as the similarity between the first description information and each piece of description information comprised in the at least one case.

17. The apparatus according to claim 12 or 13, wherein
the determining module is further configured to determine a domain to which a to-be-established mathematical model belongs;
the determining module is further configured to determine the first problem set from at least one prestored problem set based on the domain to which the to-be-established mathematical model belongs, wherein the at least one prestored problem set is in a one-to-one correspondence with at least one domain; and
the determining module is further configured to determine the at least one first problem based on the first problem set.

18. The apparatus according to claim 17, wherein the domain to which the to-be-established mathematical model belongs comprises any one of the following: a location problem domain, a scheduling problem domain, an order fulfillment domain, a supply chain domain, a packing problem domain, a transport domain, a resource assignment domain, a revenue management domain, or a production planning problem domain.

19. A mathematical model obtaining apparatus, wherein the mathematical model obtaining apparatus is applied to a first device, the first device stores at least one case, any one of the at least one case comprises description information and a mathematical model that correspond to an operations optimization problem, and the apparatus comprises:
an obtaining module, configured to obtain first description information, wherein the first description information is description information for describing a first operations optimization problem;
a determining module, configured to determine, based on a similarity between the first description information and each piece of description information comprised in the at least one case, at least one second mathematical model from at least one mathematical model comprised in the at least one case, wherein the second mathematical model belongs to a first case in the at least one case, and a similarity between the first description information and description information comprised in the first case meets a preset condition;
a processing module, configured to obtain first information based on the first description information and the at least one second mathematical model; and
an input module, configured to input the first information into a machine learning model, to obtain a first mathematical model, wherein the first mathematical model comprises an objective function and a constraint, and the first mathematical model is for solving the first operations optimization problem.

20. The apparatus according to claim 19, wherein
the obtaining module is specifically configured to obtain the first description information corresponding to at least one first problem, wherein the first description information comprises an answer to each first problem in the at least one first problem, the answer to each first problem in the at least one first problem is for obtaining the first description information, and the first problem is a problem for obtaining the description information of the first operations optimization problem.

21. A device, comprising a processor and a memory, wherein the processor is coupled to the memory;
the memory is configured to store a program; and
the processor is configured to execute the program in the memory, to enable the device to perform the method according to any one of claims 1 to 10.

22. A computer-readable storage medium, wherein the computer-readable storage medium stores a program, and when the program runs on a computer, the computer is enabled to perform the method according to any one of claims 1 to 10.

23. A computer program product, wherein the computer program product comprises a program, and when the program runs on a computer, the computer is enabled to perform the method according to any one of claims 1 to 10.

24. An operations optimization method, wherein the method comprises: solving a first mathematical model to obtain a solution result of the first mathematical model, wherein the first mathematical model comprises an objective function and a constraint, the first mathematical model is for solving a first operations optimization problem, and the first mathematical model is obtained based on the method according to any one of claims 1 to 10.
